# EUROPÄISCHE PATENTSCHRIFT

(11) **EP 4 343 286 B1**
(45) Veröffentlichungstag und Bekanntmachung des Hinweises auf die Patenterteilung: **04.06.2025**
(21) Anmeldenummer: 23192304.6
(22) Anmeldetag: 21.08.2023
(51) Int. Cl.: G01G 19/00, G01B 5/00, G01B 21/04

(54) **WIEGESYSTEM, HERSTELLUNGSVORRICHTUNG UND VERFAHREN ZUM BETRIEB EINER HERSTELLUNGSVORRICHTUNG FÜR WERKSTÜCKE**
WEIGHING SYSTEM, MANUFACTURING DEVICE AND METHOD FOR OPERATING A MANUFACTURING DEVICE FOR WORKPIECES
SYSTÈME DE PESAGE, DISPOSITIF DE FABRICATION ET PROCÉDÉ DE FONCTIONNEMENT D'UN DISPOSITIF DE FABRICATION DE PIÈCES

(30) Priorität: 22.09.2022 DE 102022124331
(43) Veröffentlichungstag der Anmeldung: 27.03.2024
(73) Patentinhaber: KIEFEL GmbH, 83395 Freilassing (DE)
(72) Erfinder: Hausmann, Matthias, 5091 Unken (AT); Seehuber, Florian, 84529 Tittmoning (DE)
(74) Vertreter: DTS Patent- und Rechtsanwälte PartmbB

(56) Entgegenhaltungen:
- EP-A1- 2 171 394

## Beschreibung

Die vorliegende Erfindung betrifft ein Wiegesystem für Werkstücke nach dem Oberbegriff des Anspruchs 1, eine Herstellungsvorrichtung nach dem Oberbegriff des Anspruchs 12 und Verfahren zum Betrieb einer Herstellungsvorrichtung nach dem Oberbegriff des Anspruchs 17.

Im Stand der Technik sind Verfahren und Anlagen zur Herstellung von Werkstücken und Produkten aus Fasermaterial oder mit Anteilen an Fasermaterialen aus einer Pulpe bekannt.

So offenbart beispielsweise die WO 2021/73674 A2 eine solche Herstellungsvorrichtung mit einer Vorformstation zum Anformen, eine Vorformstation zum Vorformen, eine Heißformungsstation zum Endformen eines Werkstücks aus umweltverträglich abbaubarem Fasermaterial in einem Faserformprozess.

Eine hierzu verbesserte Herstellungsvorrichtung und einen Herstellungsprozess offenbart die WO 2021/073672 A1, bei der zusätzlich das Aufbringen einer funktionalen Schicht oder eines Schichtsystems aus mehreren funktionalen Schichten und/oder ein Auftragen einer weiteren Schicht aus Fasermaterial auf eine zu beschichtende Oberfläche des Formteils erfolgt.

Bei diesen grundsätzlich sehr geeigneten Herstellungsvorrichtungen und Verfahren hat sich gezeigt, dass es teilweise sehr aufwändig ist, eine definierte Qualität der Produkte und Werkstücke sicherzustellen, insbesondere bei hohen Leistungen.

Es ist die Aufgabe der vorliegenden Erfindung, eine hinsichtlich der Einstellbarkeit von Qualität der Werkstücke und Produkte verbesserte Herstellungsvorrichtung und Herstellungsverfahren vorzuschlagen.

Diese Aufgabe wird erfindungsgemäß gelöst durch ein Wiegesystem nach den Merkmalen des Anspruchs 1, eine Herstellungsvorrichtung nach den Merkmalen des Anspruchs 12 und ein Verfahren nach den Merkmalen des Anspruchs 17.

Vorteilhafte Ausgestaltungen sind in den jeweiligen, zugehörigen Unteransprüchen angegeben. Weiterer relevanter Stand der Technik ist in der EP 2 171 394 A1 offenbart.

Danach wird die Aufgabe gelöst durch ein Wiegesystem für eine Herstellungsvorrichtung für Produkte, umfassend mindestens eine elektronisch auswertbare Waage, umfassend mindestens ein Trägerelement zur Positionierung von mindestens einem Werkstück oder Werkstückstapel, insbesondere einer Gruppe von horizontal benachbarten Werkstücken und/oder Werkstückstapeln und eine mit der Waage verbundene Auswerteeinheit, zum Empfang und Verwertung von erfassten Wiegedaten. Hierbei ist die Waage im Zusammenwirken mit der Auswerteeinheit ausgebildet, um das Gesamtgewicht und die horizontale Gewichtsverteilung von mindestens einem auf dem Trägerelement abgelegten Werkstück oder Werkstückstapel zu erfassen.

Die Auswerteeinheit kann vorteilhafterweise eine in der Waage integrierte Auswerteeinheit sein und bedarfsweise Datenspeicher umfassen und/oder mit mindestens einem Datenspeicher verbunden sein. Weiterhin kann die Auswerteeinheit mit einer Steuereinheit für die Herstellungsvorrichtung verbunden sein oder einen integralen Bestandteil der Steuervorrichtung der Herstellungsvorrichtung darstellen. Weiterhin kann die Auswerteeinheit übliche (mikro-)elektronische Bauteile umfassen, die zum Betrieb und zur Messwertwandlung und/oder -verarbeitung erforderlich sind, wie beispielsweise Analog-Digital-Wandler, Prozessoreinheiten, Interface-Einheiten zu angrenzenden lokalen oder mobilen Empfangseinheiten und/oder Kommunikationsnetze, insbesondere zu einer Steuereinheit.

Hierbei kann das Trägerelement insbesondere als Platte oder Schale ausgebildet sein. Bei einer Ausführungsform kann das Trägerelement eine das Trägerelement aufnehmende Tragstruktur, Rahmen oder dergleichen aufweisen und/oder hiermit verbunden sein.

Weiterhin ist der Begriff "Werkstück" nicht einschränkend zu verstehen und meint jede Vor- oder Endstufe eines mittels der Herstellungsvorrichtung in einem ein- oder mehrstufigen Formungsprozess hergestellten Produktes, so dass in analoger Weise vorliegend ein Produkt ein Werkstück in seiner finale Fertigungsstufe ist.

Bei einer vorteilhaften Ausführungsform kann vorgesehen werden, dass das Trägerelement 202 aus zwei oder mehr einzelnen Trägerelementen gebildet wird.

Obwohl vorliegend häufig vereinfachend nur von "einem Werkstück" gesprochen wird, soll hierunter immer auch eine Gruppe von zwei oder mehr Werkstücken verstanden werden, wenn nicht etwas Gegenteiliges ausgeführt wird. Es ist insgesamt vorteilhaft, wenn bei allen Behandlungsschritten eine Mehrzahl von Werkstücken gleichzeitig gebildet, auf diese eingewirkt wird und/oder diese sensorisch erfasst werden.

Ein Vorteil für das Wiegesystem kann darin bestehen, dass die Waage im Zusammenwirken mit der Auswerteeinheit ausgebildet ist, als Gewichtsverteilung das jeweilige Einzelgewicht von zueinander benachbarten mindesten zwei Werkstücken und/oder Werkstückstapeln zu erfassen.

Hierbei erfolgt die Erfassung der Gewichtsverteilung und der Einzelgewichte durch die Bestimmung des Ist-Schwerpunktes und/oder des Vektors der Ist-Schwerpunktverschiebung zu einem theoretischen Soll-Schwerpunkt oder Soll-Vektor einer theoretischen, erwarteten Schwerpunktverschiebung.

Vorteilhafterweise kann bei einer Ausführungsform vorgesehen werden, dass die Waage ein oder zwei, das Trägerelement zur Ablage direkt oder indirekt tragende, Tragsäulen aufweist, welche mindestens einen Torsionssensoren aufweisen und/oder hiermit verbunden sind, insbesondere zwei oder mehr Torsionssensoren aufweisen, zur mindestens teilweisen Ermittlung der Gewichtsverteilung.

Die Tragsäulen sind hierbei vorteilhafterweise starr mit dem Trägerelement verbunden, so dass eine Schwerpunktsverschiebung auf dem Trägerelement zur Einleitung eines messbaren Biegemoments an der Tragsäule und/oder im Tragelement führt, wobei die entsprechenden Biegemomente mittels geeigneter Sensoren erfasst werden.

Werden mehr als zwei Tragsäulen vorgesehen, stehen diese vorteilhafterweise fluchtend in einer Gasse oder einer Reihe, damit sich ein messbares Biegemoment in den meisten Teilflächen des Trägerelements ausbilden kann.

Bei einer weiter verbesserten Ausführungsform kann vorgesehen werden, dass die Waage mindestens drei Auflageelemente für das Trägerelement aufweist, wobei die Auflageelemente Kraftmesssensoren aufweisen oder solche darstellen, wobei die mindestens drei Auflageelemente in einem Kontaktmuster mit drei nicht in einer Reihe befindlichen Kontaktstellen mit dem Trägerelement verbunden sind und wobei die mindestens drei Auflageelemente und/oder deren Kraftmesssensoren ausgebildet sind, Messwerte an die Auswerteeinheit zu senden, welche basierend hierauf das Gesamtgewicht und die Gewichtsverteilung ermitteln.

Das Kontaktmuster wird gebildet aus den Auflagen- oder Kontaktpunkten der Auflageelemente mit dem Trägerelement und der hierdurch eingeschlossenen Fläche. Dies ist im einfachsten Fall eine nicht starre Verbindung, ein Dreieck oder ein Viereck, wobei die polygonale Benennung nicht einschränkend im mathematischen Sinne zu verstehen ist. Eine "Ecke" dieses Kontaktmusters ist beispielsweise mit der Auflagefläche eines Auflageelements gleichzusetzen.

Bei einer weiter verbesserten Ausführungsform kann vorgesehen werden, dass das Wiegesystem und/oder die Auswertungseinheit mindestens eine Eingabeschnittstelle zum Empfang von Sensordaten und/oder Produktionsdaten umfasst, wobei
- die Sensordaten insbesondere erfasste, geometrische Messwerte und
- die Produktionsdaten insbesondere definierte Soll-Werte
des mindestens einen Werkstücks oder des mindestens einen Werkstückstapels betreffen.

Somit umfasst das Wiegesystem idealerweise eine Sensoreinheit.

Vorteilhafterweise ist der
- die Geometrie des Werkstücks erfassende Sensor ein Sensor, der eine zweidimensionale Schattenfläche des Werkstücks und/oder des Werkstückstapels erfasst, wie beispielsweise eine CCD-Kamera, eine Zeilenkamera etc. oder der eine Topografie des Werkstücks und/oder des Werkstückstapels erfasst, wie beispielsweise ein 3D-Laserscanner. Weiterhin kann ein Vorteil darin bestehen, mindestens einen, einen Soll-Wert des Werkstücks erfassenden Sensor vorzusehen, der mindestens einen weiteren Materialwert erfasst, wie beispielsweise ein Wärmesensor, ein Feuchtesensor, ein Strahlungs- und/oder ein Lichtsensor etc.

Um Rückschlüsse aus den Wiegedaten für den Herstellungsprozess und die Herstellungsvorrichtung ableiten zu können, ist es vorteilhaft, die Wiegedaten zu evaluieren. Dies kann, wie vorstehend beschrieben, durch den Einsatz einer Sensoreinheit erfolgen, bei der von der Masse der Werkstücke unterschiedliche Größen erfasst werden. Weil die ermittelten Massen aus den Wiegedaten der Waage von zentraler Bedeutung für die Bewertung der Werkstücke und die Steuerung des Herstellungsprozesses und des Herstellungsverfahrens sind, kann bei einer weiter verbesserten Ausführungsform des Wiegesystems vorgesehen werden, dass eine weitere Waage umfasst ist, welche mit der Auswerteeinheit verbunden ist. Dies sollte insbesondere eine weitere Waage sein, die zur ersten Waage das Folgende aufweist:
- eine unterschiedliche Anordnung der mindestens einen Tragsäule oder ein unterschiedliches Kontaktmuster der Auflageelemente
   oder
- statt der mindestens einen Tragsäule der ersten Waage mindestens drei Auflageelemente in einem Kontaktmuster.

Hierbei sind in analoger Weise die Verbindungen zu einer oder derselben Auswerteeinheit und/oder sonstiger Elemente vorzusehen, insbesondere eine Sensoreinheit, wie vorstehend beschrieben. Anders ausgedrückt kann es vorteilhaft sein, wenn sich die zweite Waage vom Waagentyp und/oder von der Art des Aufbaus hinsichtlich des Kontaktmusters der Kontaktstellen und/oder der Anordnung der Tragsäulen von der ersten Waage unterscheidet.

Somit kann durch ein unterschiedliches Kontaktmuster eine geänderte Auflösung der Lage des Ist-Schwerpunktes erreicht werden und somit der reale Ist-Schwerpunkt und/oder die Lastverteilung auf die einzelnen Tragsäulen oder Auflageelemente verifiziert werden.

Eine weitere Verbesserung des Wiegesystem kann darin bestehen, dass bei einer weiteren Ausführungsform vorgesehen wird, dass die mindestens eine Waage in eine Fördereinheit integriert ist, wobei die Fördereinheit
▪ als Fördermittel ein Förderband umfasst, wobei die Waage in das Förderband derart integriert ist, dass das Trägerelement von mindestens einer Bandlage überdeckt ist und/oder
▪ ein Fördermittel umfasst, mittels welchem die Waage mindestens teilweise transportierbar ist, insbesondere ein Transportroboter oder eine Linearantrieb, insbesondere ein elektromagnetischer Linearantrieb.

Ist die Waage in eine Fördereinheit integriert, kann es vorteilhaft sein, wenn das mindestens eine Trägerelement nur von einer Bandlage überdeckt oder überstreift wird. Insbesondere bei sehr leichten Werkstücken, deren Gewicht wesentlich kleiner als das Gewicht des Trägerelements ist, hat es sich herausgestellt, dass der Einfluss der Bandlage die Wiegedaten stark beeinflusst, wobei dieser Einschluss mit zunehmendem Gewicht der Werkstücke oder Werkstückstapel sinkt. Somit kann es von Vorteil sein, wenn die Bandspannung und der Bandantrieb steuerbar sind, so dass das Band der Fördereinheit beim Wiegeschritt entspannt werden kann und/oder kurzfristig gestoppt werden kann, während die Wiegung erfolgt.

Bei einer alternativen Ausführungsform kann es vorteilhaft sein, wenn das Trägerelement eine Halterungsstruktur ist, die an dem Rahmen eines zur Waage gehörenden Waageförderbandes befestigt ist. Dieses Waageförderband ist idealerweise in die Fördereinheit integriert. Bei dieser Ausführungsform werden als Tara das Waageförderband und die Halterungsstruktur erfasst. Weiterhin ist es bei dieser Ausführungsform sinnvoll, das Band des Waageförderbands sehr stark zu spannen und/oder ein sehr unflexibles Bandmaterial vorzusehen, um die mittels der Waage nicht messbare Deformation im Bandmaterial zu minimieren.

Bei einer weiteren vorteilhaften Ausführungsform kann vorgesehen werden, dass die Waage mindestens zwei antreibbare Trägerelemente in Form von Walzen umfasst, insbesondere mit einem Rohrmotor ausgestatteten oder diesen bildenden Walzen. Hierbei sind die Walzen mindestens einseitig auf mindestens einem Auflageelement angeordnet, so dass das Gewicht und/oder der Gewichtsverlauf der Werkstücke bei der Auflage auf einer Walze erfassbar ist, insbesondere beim Überfahren erfassbar ist. Diese Ausführungsform kann verbessert werden, indem eine Mehrzahl von antreibbaren Walzen das Trägerelement bilden, die jeweils beidseitig auf einem Auflageelement angeordnet sind. Die Auflageelemente sind mit der Auswerteeinheit verbunden, welche ausgestattet ist, um aus den einzelnen Wiegedaten der Auswerteeinheiten das Gewicht eines einzelnen Werkstücks und/oder den Ist-Schwerpunkt mindestens eines Werkstücks und/oder mindestens eines Werkstückstapels zu bestimmen.

Die Auswerteeinheit ist insbesondere ausgestattet, um aus den einzelnen Wiegedaten der Auswerteeinheiten das Gewicht einer horizontal zueinander angeordneten Gruppe aus Werkstücken und/oder Werkstückstapeln den Ist-Schwerpunkt zu bestimmen.

Bei einer weiter verbesserten Ausführungsform kann vorgesehen werden, dass die mindestens eine Waage
- als dynamische Waage ausgebildet ist und entsprechende Bauteile umfasst, um eine dynamische Messung durchzuführen, wobei die Werkstücke bei der Messung relativ zur Waage gefördert werden und/oder
- als statische Waage ausgebildet ist und entsprechende Bauteile umfasst, um eine statische Messung durchzuführen, wobei die Werkstücke bei der Messung relativ zu Waage stehen und nicht gefördert werden, um eine statische Messung durchzuführen.

Anders ausgedrückt soll vorliegend unter einer dynamischen Wiegung ein Wiegeschritt verstanden werden, bei dem die Werkstücke zeitgleich bewegt werden, und, insbesondere relativ zur Waage, den Auflageelementen und/oder den Tragsäulen, eine Geschwindigkeit aufweisen. Analog soll vorliegend unter einer statischen Wiegung ein Wiegeschritt verstanden werden, bei dem die Werkstücke zeitgleich ruhen und, insbesondere zur Waage, den Auflageelementen und/oder den Tragsäulen keine Relativgeschwindigkeit aufweisen. Somit bildet ein Wiegeschritt, bei dem die Werkstücke parallel mit der Waage transportiert werden, eine Sonderform der statischen Wiegung.

Bei einer weiter verbesserten Ausführungsform kann vorgesehen werden, dass
- mindestens ein Auflageelement relativ zum Trägerelement verschieblich gelagert, vorteilhafterweise antreibbar ist, insbesondere motorisch antreibbar ist und/oder
- das Trägerelement relativ zu mindestens einem Auflageelement verschieblich gelagert, vorteilhafterweise antreibbar ist, insbesondere motorisch antreibbar ist.

Durch die Veränderung der Auflageelemente in ihrer Lage relativ zu dem Trägerelement, wird der Soll-Schwerpunkt definiert verändert und es kann eine auf die Werkstücke oder Werkstückstapel angepasste erste Messung und/oder ein kontrollierender weiterer Messschritt vorgenommen werden. Gerade bei sehr leichten Werkstücken und/oder bei der Ablage der ersten Gruppe oder Lage von Werkstücken, die nachfolgend überdeckt werden, weil ein Stapel gebildet wird, kann es vorteilhaft sein, frühzeitig die Schwerpunktlage und/oder die Gewichtsverteilung redundant zu überwachen. Dies kann alleinig oder in der Zusammenschau mit weiteren Messgrößen erfolgen.

Hierbei kann es von Vorteil sein, wenn zwischen dem Trägerelement und dem freien Ende des Auflageelements eine Linearführung angeordnet ist, in welcher das freie Ende des Auflageelements geführt werden kann. Insbesondere kann es von Vorteil sein, wenn das Trägerelement an seiner den Auflageelementen zugewandten Seite mindestens eine Linearführung aufweist, in dem das freie Ende mindestens eines Auflageelements verschieblich gelagert ist. Die Linearführung ist hierbei nicht einschränkend zu verstehen und kann eine beliebig geformte Strecke sein, insbesondere mit mindestens einem geraden und/oder kurvigen Streckenabschnitt.

Bei einer weiter verbesserten Ausführungsform kann vorgesehen werden, dass die mindestens eine Waage auf oder an einem elektromagnetischen Direktantrieb mit mindestens einer Antriebsschiene und mindestens zwei, unabhängig voneinander antreibbaren und steuerbaren Movern angeordnet ist und/oder hierdurch gebildet wird.

Die Antriebsschiene des Direktantriebs ist insbesondere als Antriebsoval ausgerichtet, an dem die Mover endlos umlaufen können. Das Antriebsoval weist idealerweise eine gerade, kurzfreie Messtrecke (Hintrum), zwei Umlenkungen und eine Rückführungsstrecke (Rücktrum) auf. Die Messstrecke wird insbesondere dadurch definiert, dass dort der Wiegeschritt durchführbar ist, unabhängig von der Fördergeschwindigkeit und Förderrichtung beim Messschritt.

Bei einer weiteren Verbesserung dieser Ausführungsform kann vorgesehen werden, dass
- mindestens ein erster Mover oder eine erste Antriebseinheit mindestens ein Auflageelement aufweist und
- mindestens ein weiterer Mover oder eine weitere Antriebseinheit mindestens ein weiteres Auflageelement aufweist.

Es ist insbesondere von Vorteil, wenn zwei Paare von Movern vorgesehen werden, also insgesamt vier Mover mit jeweils einem Auflageelement voneinander antreibbar die Waage bilden, die das Trägerelement definiert tragen. Weist das Trägerelement auf der Unterseite mindestens auf einer Seite eine Linearführung auf, kann die relative Lage der Auflageelemente zueinander verändert werden und damit kann der Soll-Schwerpunkt definiert verändert werden. Anders ausgedrückt, es kann über die Annäherung oder die Beabstandung der Auflageelemente zueinander eine Veränderung des Soll-Schwerpunktes und damit der Auflösung des Ist-Schwerpunktes relativ zum Soll-Schwerpunkt veranlasst werden.

Bei einer weiter verbesserten Ausführungsform kann vorgesehen werden, dass mindestens ein Auflageelemente inaktiviert werden kann und/oder von der jeweiligen Kontaktstelle vertikal entfernt werden kann.

Hierbei meint kontaktlos, dass die Berührung zwischen Auflageelement und dem Trägerelement gelöst wird und diese beiden Elemente mindestens kurzzeitig beabstandet werden. Hierdurch kann ebenfalls bei mehr als drei Auflageelementen eine Variation des Soll-Schwerpunktes und damit eine Verifizierung des Ist-Schwerpunktes vorgenommen werden.

Auch wenn vorliegend vorrangig von der Bestimmung eines "Schwerpunktes" gesprochen wird, soll dies gleichbedeutend sein, mit der "Erfassung der Gewichtsanteile" an einzelnen Tragsäulen und/oder an einzelnen Auflageelementen, weil der "Schwerpunkt" (Soll-Schwerpunkt und/oder Ist-Schwerpunkt) hieraus abgeleitet wird. Der Soll-Schwerpunkt kann insbesondere ein theoretisch definierter Datensatz oder Wert sein, der unter idealen Bedingungen zu erwarten ist.

Weiterhin umfasst die Erfindung eine Herstellungsvorrichtung für Werkstücke umfassend eine Materialzuführungseinheit, eine Formungseinheit und eine Ausleiteinheit, wobei die Formungseinheit mindestens eine Formungsstation mit mindestens einem Formwerkzeug und mindestens einer Pressvorrichtung aufweist, wobei das mindestens eine Formwerkzeug an der Pressvorrichtung gehalten und von dieser motorisch angetrieben verfahrbar ist und wobei mindestens eine Steuereinheit vorgesehen ist, mittels welcher mindestens ein Aggregat und/oder ein Device gesteuert und/oder geregelt werden kann. Hierbei ist vorteilhafterweise ein Wiegesystem zur Ermittlung von Wiegedaten von mindestens einem Werkstück und/oder mindestens einem Werkstückstapel nach einem der vorstehenden Ausführungsformen und Varianten umfasst, wobei das Wiegesystem insbesondere in der Formungseinheit und/oder nach der Formungseinheit angeordnet ist.

Die Herstellungsvorrichtung kann weiterhin eine Materialzuführungseinheit für Ausgangsstoffe wie eine faserhaltige Pulpe oder sonstige Verbrauchsmaterialien umfassen. Diese Materialzuführungseinheit ist vorteilhafterweise mit einer Versorgungseinheit und/oder einer Vorlageeinheit verbunden. Vorteilhafterweise weist die Pressvorrichtung Trag- und Befestigungselemente für mindestens ein Formwerkzeug auf, das insbesondere ein beheiztes Formwerkzeug sein kann.

Hierbei meint "Aggregat" jegliches steuer- und regelbares Bauteil und "Device" meint jeglichen Aktor und/oder Sensor, wobei ein "Device" auch ein "Aggregat" sein kann.

Die Herstellungsvorrichtung ist derart ausgebildet und weist entsprechende Mittel auf, um Werkstücke auf einem Formteil zu entlassen, insbesondere auszublasen mittels Druckluft. Insbesondere besteht ein Vorteil darin, dass das Formwerkzeug und/oder eine das Formwerkzeug haltende und/oder antreibende Vorrichtung ausgebildet ist, um ein Werkstück oder eine Gruppe von Werkstücken aus dem Formwerkzeug unmittelbar auf der Waage insbesondere auf dem Trägerelement zu positionieren.

Bei einer verbesserten Ausführungsform der Herstellungsvorrichtung kann vorgesehen werden, dass die mind. eine Formungsstation und/oder deren mind. ein Formwerkzeug
- zum pressenden Formen von Werkstücken aus einem Ausgangswerkstoff ausgebildet ist und/oder
- zum pressenden und heißen Formen von Werkstücken aus einem Ausgangswerkstoff und/oder einer Vorform eines Werkstücks ausgebildet ist, insbesondere zwei Formungsstationen mit jeweils mindestens einem Formwerkzeug umfasst.

Weiterhin kann vor der ersten Formungsstation eine Vorformstation vorgesehen sein, die eine Bewegungseinheit, wie beispielsweise einen Knickarmroboter, mit einem Saugwerkzeug umfasst. Das Saugwerkzeug ist hierbei ausgebildet und verfahrbar, so dass der bereitgestellte riesel- oder fließfähige Ausgangswerkstoff angesaugt und eine Vorform des Werkstücks gebildet werden kann. Diese Vorform mit einem in der Regel sehr hohen Anteil an Feuchtigkeit wird nachfolgend in einer Formungsstation weiter ausgeformt.

Weiterhin kann es vorteilhaft sein, wenn nach der Formungsstation, insbesondere nach der zweiten Formungsstation, die vorteilhafterweise als Heißformstation ausgebildet ist, eine Konfektionierungseinheit für die Werkstücke und/oder Werkstückstapel vorgesehen ist. Die Konfektionierungseinheit kann eine Schneidestation, eine Beschichtungsstation, eine Stapelstation und/oder eine Verpackungsstation umfassen. Hierbei wird in der Schneidestation durch Materialentfernung eine Endbearbeitung der Werkstücke vorgenommen und in der Beschichtungsstation insbesondere auf der Innenseite der Werkstücke mindestens auf einer Teilfläche eine gas- und/oder flüssigkeitshemmende Schicht aufgebracht.

Bei einer weiter verbesserten Ausführungsform kann vorgesehen werden, dass das Wiegesystem eine Waage umfasst, die stromabwärts zum mindestens einen Formwerkzeug zum pressenden Formen von Werkstücken aufweist und insbesondere stromabwärts zum Formwerkzeug zum pressenden und heißen Formen von Werkstücken angeordnet ist.

Hierbei meint "stromabwärts" auch, dass die Waage in das Formwerkzeug integriert sein kann und nach der Formung in dem zugehörigen Formwerkzeug den Wiegeschritt durchführen kann.

Bei einer weiter verbesserten Ausführungsform kann vorgesehen werden, dass die Auswerteeinheit und die Steuereinheit derart datenleitend verbunden und funktional ausgebildet sind, insbesondere entsprechende Softwareprogramme nutzen, so dass die Steuereinheit basierend auf den von der Auswerteeinheit erhaltenen Wiegedaten, insbesondere ausgewertete Wiegedaten (Auswertedaten), mindestens ein Aggregat und/oder ein Device mindestens zweiweise gesteuert und/oder geregelt werden kann, insbesondere mindestens ein Aggregat und/oder ein Device stromaufwärts zur Waage mindestens zweiweise gesteuert und/oder geregelt werden kann.

Hierbei sollen unter "Auswertedaten" jegliche Daten verstanden werden, die die Auswerteeinheit nach der Auswertung weiterleiten und/oder speichern. Auswertedaten können insbesondere in einer Auswahl von Wiegedaten, Parametern oder Kennkurven für die Steuerung von Aggregaten oder Aktoren bestehen, insbesondere Aggregate und Aktoren, die stromaufwärts zur Waage angeordnet sind. Weiterhin können Auswertedaten auch Daten umfassen, die eine ergänzende und/oder geänderte Erfassung mittels Sensoren betreffen, beispielsweise um Wiegedaten und/oder sonstige Messdaten zu verifizieren.

Die Auswertedaten können insbesondere unter Anwendung einer Kl-basierten Software (Künstliche Intelligenz) ermittelt und aufbereitet werden, insbesondere unter gemeinsamer Betrachtung von weiteren Messwerten und Messdaten.

Auswertedaten können auch Daten betreffen, die einen Warn- und Signalhinweis ggf. in einem Anzeigemonitor (HMI) darstellen und/oder von einem sonstigen Signalgeber ausgesendet werden, wie beispielsweise eine Lampe, eine LED-Anzeige und/oder ein Schallemitter.

Bei einer weiter verbesserten Ausführungsform kann vorgesehen werden, dass mindestens eine Formungsstationen und/oder mindestens ein Formwerkzeug ausgebildet ist, eine Gruppe von zwei oder mehr Werkstücke zu formen und Entlassmittel umfasst und/oder ausgebildet ist, um einzelne Werkstücke und/oder Gruppen von Werkstücken gesteuert zu entlassen und/oder zu halten, insbesondere unmittelbar auf die Waage und/oder das Tragelement der Waage zu entlassen.

Als Entlassmittel kann das Saugwerkzeug und/oder das Formwerkzeug beispielsweise innere Kanäle oder Kammern aufweisen, die einzeln oder als Teilgruppe gesteuert mit einem Unterdruck und/oder mit einem Druckimpuls beaufschlagt werden können. Auf diese Weise können Werkstücke zeitlich versetzt ausgestoßen und abgelegt werden. Hierbei sind das Saugwerkzeug und/oder das Formwerkzeug und die zugehörigen inneren Kanäle und Kammern derart ausgebildet und ansteuerbar, dass zeilen-, spalten- oder teilgruppenweise Werkstücke entlassen werden können.

Vorteilhafterweise werden die Werkstücke einer Zeile, Spalte oder Teilgruppe dann nacheinander gewogen, bis die gesamte Gruppe, die ein Werkzeug aufnehmen kann, vollständig abgelegt und gewogen ist.

Weiterhin umfasst die Erfindung ein Verfahren zum Betrieb einer Herstellungsvorrichtung, umfassend die Schritte:
- Bereitstellung eines Ausgangsmaterials,
- Einbringen eines Ausgangsmaterials in eine Formungseinheit, wobei die Formungseinheit mindestens eine Formungsstation mit mindestens einem Formwerkzeug und mindestens einer Pressvorrichtung, idealerweise zwei Pressvorrichtungen, aufweist und
- Formung mindestens eines Werkstücks, insbesondere einer Gruppe von Werkstücken mittels des Formwerkzeuges.

Hierbei werden stromabwärts der Formungsstation mittels einer Waage eines Wiegesystems in einem Wiegeschritt das Gesamtgewicht und die horizontale Gewichtsverteilung von mindestens einem auf dem Trägerelement positionierten Werkstück oder Werkstückstapel erfasst, insbesondere wird eine Gruppe von zwei oder mehr positionierten Werkstücken oder Werkstückstapeln erfasst.

Hierbei wird das Ausgangsmaterial als fließ- oder rieselfähiges Material zugeleitet und beispielsweise in einem offenen Vorlagenbehälter für ein Saugwerkzeug für eine Vorformung zur Verfügung gestellt.

Bei einer verbesserten Ausführungsform ist vorgesehen, dass das Werkstück von dem Formwerkzeug und/oder der Pressvorrichtung unmittelbar auf der Waage positioniert wird. Das Ausstoßen eines Werkstücks aus einem Werkzeug kann auf jede geeignete Weise erfolgen, insbesondere über mindestens einen Gasdruckimpuls, also ein Ausblasen der Werkstücke. Bei einer verbesserten Verfahrensversion werden die Werkstücke einer Gruppe von Werkstücken nicht alle gleichzeitig ausgestoßen, sondern als Zeilen, Spalten oder Teilgruppen ausgestoßen. Hierzu kann beispielsweise nur auf eine Anzahl der Werkstücke ein Druckimpuls ausgeübt werden und/oder eine andere Teilgruppe, die noch nicht ausgestoßen werden soll, kann über Einleitung eines Unterdrucks im Werkzeug gehalten werden.

Bei einer verbesserten Verfahrensvariante kann vorgesehen werden, dass nach der gemeinsamen Formung einer Gruppe von zwei oder mehr Werkstücken eine schrittweise Wiegung für eine Anzahl (Teilgruppe) von Werkstücklagen größer oder gleich 2 erfolgt, insbesondere eine lagenweise Wiegung der Werkstücke erfolgt.

Es kann ein weiterer Vorteil darin bestehen, wenn die Gruppe aus Werkstücken, die ein Werkzeug gleichzeitig aufnehmen kann, in nur einer Zeile oder einer Spalte an Werkstücken nacheinander ausgestoßen, gestapelt und nach jedem Ausstoßen gewogen wird. Mit anderen Worten, aus jeder Gruppe von Werkstücken aus n Zeilen und m Spalten, die ein Werkzeug maximal gleichzeitig aufnehmen kann, wird auf dem Tragelement der Waage
- nur eine einige Zeile mit n Lagen oder
- nur eine einzige Spalte mit m Lagen
gebildet.

Vorliegend wird als "Zeile" eine Teilgruppe oder Reihe von benachbarten Werkstücken oder Positionen für Werkstücke verstanden, die quer zur Haupttransportrichtung ausgerichtet ist und in analoger Weise wird als "Spalte" eine Teilgruppe oder Reihe von Werkstücken oder Positionen von Werkstücken verstanden, die parallel zur Haupttransportrichtung ausgebildet ist.

Der große Vorteil besteht darin, dass somit auf sehr einfache Weise eine Differenzierung der einzelnen Werkstückpositionen eines Werkzeugs möglich wird, wenn eine positionierte Teilgruppe von Werkstücken ein zu anderen Teilgruppen unterschiedliches Gewicht oder Gewichtsverteilung aufweist.

Es versteht sich für den Fachmann, dass diese Verfahrensvarianten nicht nur zeilen- oder spaltenweise erfolgen können, sondern auch Kombinationen denkbar sind. Besteht ein auf der Waage zu bildender Gesamtstapel aus n Zeilen, m Spalten und k Lagen, könnte in den ersten Wiegeschritten zeilenweise ein Teilstapel aus n Zeilen und m Spalten und k-3 Lagen gebildet werden und anschließend spaltenweise die letzten 3 Lagen des Gesamtstapels nacheinander positioniert und einzeln gewogen werden.

Diese Verfahrensvariante kann auch in analoger Weise für Teilgruppen von Werkstücken erfolgen, die nicht zeilen- oder spaltenweise ausgestoßen und auf dem Tragelement der Waage positioniert werden.

Eine weitere Verbesserung des Verfahrens kann darin bestehen, dass nach der gemeinsamen Formung einer Gruppe von zwei oder mehr Werkstücken eine mehrfache Wiegung vor einer nächsten Formung einer nächsten Gruppe von Werkstücken erfolgt, indem unabhängig eine Teilanzahl an Werkstücken der gemeinsam geformten Gruppe in Teilwiegungen gewogen werden.

Hierbei kann ein zu der schrittweisen Wiegung analoges Verfahren angewendet werden, insbesondere das Ausstoßen von Teilgruppen aus Werkstücken aus einem Formwerkzeug und Positionieren auf dem Trägerelement.

Eine weitere Verbesserung des Verfahrens kann darin bestehen, dass der Wiegeschritt nach der ersten Formung und einer weiteren Formung erfolgt.

Somit ist mindestens eine Waage zwischen einer Vorformstation und einer erste Formungsstation und/oder einer ersten Formungsstation und einer stromabwärts befindlichen zweiten Formungsstation für Werkstücke angeordnet.

Ein weitere Verbesserung des Verfahrens kann darin bestehen, dass in dem Wiegeschritt Wiegedaten ermittelt und an eine Auswerteeinheit geleitet werden, wobei die Auswerteeinheit die Wiegedaten, insbesondere die Auswertedaten, an eine Steuereinheit leitet und basierend hierauf mindestens
- ein Aggregat und/oder ein Device mindestens zeitweise gesteuert und/oder geregelt wird und/oder
- ein Hinweis- und/oder Warnsignal an eine Ausgabeeinheit gesendet wird, insb. eine **HMI,** einen optischen oder akustischen Signalgeber.

Hierbei meint "basierend", dass diese Wiegedaten oder Auswertedaten alleinig oder ergänzend zur Steuerung genutzt werden, was unmittelbar oder mit zeitlichem Versatz erfolgen kann. Die Steuerung erfolgt weiterhin unter Einbindung von SollWertvorgabe, insb. Algorithmen, Wertetabellen und/oder einer KI.

Insgesamt kann es vorteilhaft sein, wenn das Wiegesystem nach einem der vorstehend genannten Ausführungsformen und Ausführungsvarianten ausgebildet ist. Es kann insgesamt auch vorteilhaft sein, wenn Verfahren für eine Herstellungsvorrichtung angewendet werden, die nach einem vorstehend genannten Ausführungsformen und Ausführungsvarianten ausgebildet sind.

Alle Vorteile, Aspekte und Merkmale sowie Merkmalskombinationen, die vorstehend für eine Kategorie genannt wurden, wie das Wiegesystem, die Herstellungsvorrichtung oder das (Herstellungs-)Verfahren, sollen in analoger Weise auch für jeweils die (eine) andere Kategorie gelten, wenn es nicht technisch unmöglich ist.

Weiterhin soll vorliegend keine Unterscheidung zw. Messwerten und Messdaten vorgenommen werden und diese Begriffe sollen, sofern nichts Unterschiedliches ausgeführt ist, synonym verwendet werden, da dem Fachmann bekannt ist, wie aus den rohen und ggf. analogen Messwerten beispielsweise eines Sensors, aufbereitete Messdaten, insbesondere digitale Messdaten, abgeleitet werden können und weiterhin Art und Umfang der von einem Sensor übermittelten Messwerte und Messdaten von der Bauart und dem Funktionsumfang eines Sensors abhängig ist.

Weitere Einzelheiten und Vorteile der Erfindung sollen nun anhand eines in den Zeichnungen dargestellten Ausführungsbeispiels näher erläutert werden.

Es zeigen:
- Fig. 1: eine schematische Ansicht einer Herstellungsvorrichtung mit dem Wiegesystem,
- Fig. 2: das Wiegesystem in einer ersten Ausführungsform,
- Fig. 3: das Wiegesystem in einer zweiten Ausführungsform,
- Fig. 4: das Wiegesystem in einer dritten Ausführungsform,
- Fig. 5: das Wiegesystem in einer vierten Ausführungsform,
- Fig. 7: das Wiegesystem in einer fünften Ausführungsform und
- Fig. 8: das Wiegesystem in einer sechsten Ausführungsform.

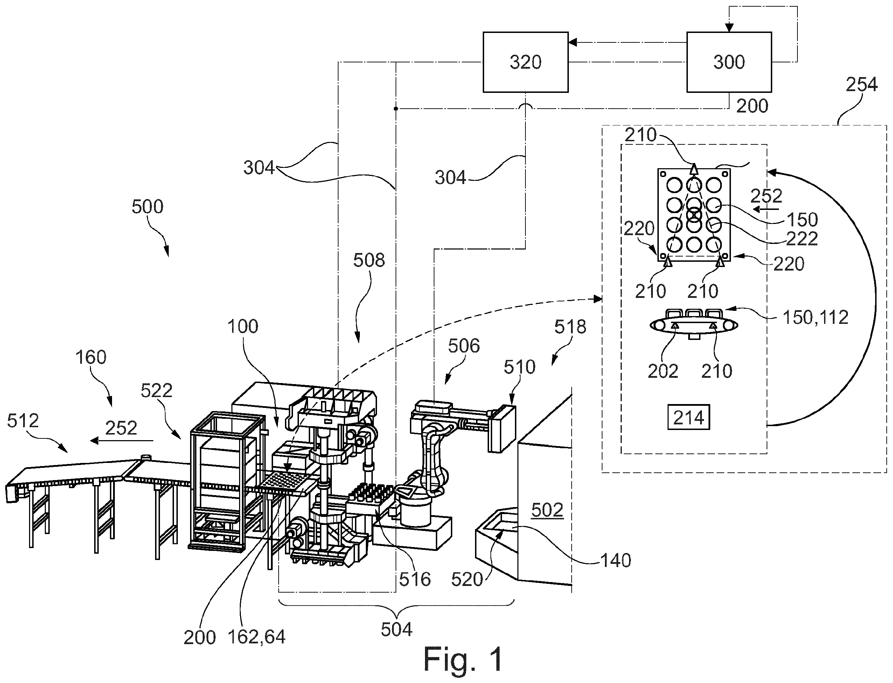

Die Figur 1 zeigt beispielhaft einen schematischen Aufbau einer Herstellungsvorrichtung 500 zur Herstellung von Werkstücken 150 aus einem Fasermaterial. Hierbei ist das Wiegesystem 100 im Zusammenhang und einer möglichen Einbauposition in einer Herstellungsvorrichtung 500 nach einer zweiten Formungsstation 508 dargestellt.

Die Herstellungsvorrichtung 500 umfasst eine Materialzuführungseinheit 502, eine Vorformstation 518, eine erste Formungsstation 506, eine zweite Formungsstation 508, eine Konfektionierungseinheit 522 und eine Ausleiteinheit 512. Als Teil der Vorformstation 518 ist ein Zuführungstank 520 umfasst. Die erste Formungsstation 506 umfasst eine Bewegungseinheit 524, ausgebildet als mehrachsiger Roboter, an welcher ein die Werkstücke vorformendes Saugwerkzeug 510 angeordnet und geführt ist. Die Konfektionierungseinheit 522 kann bedarfsweise ein oder mehrere Funktionen und entsprechende Stationen umfassen, wie Beschichtung, Schneiden, Stapeln und/oder Verpacken. Weiterhin ist eine Ausleiteinheit 512 vorgesehen. Die Materialzuführungseinheit 502 bildet mit der Formungseinheit 504 und der Konfektionierungseinheit 522 eine Fertigungslinie, wobei der Ausleitförderer 512 die Waage 200 des Wiegesystems 100, zweite Formungsstation 508 und die Konfektionierungseinheit 522 verbindet oder sich an die Konfektionierungseinheit 522 stromabwärts anschließt, zur Ausleitung der Werkstücke in den jeweiligen Losgrößen und/oder Verpackungseinheiten.

Die Waage 200 des Wiegesystems 100 ist Teil einer Fördereinheit 160 und baulich in das Fördermittel 162 integriert, das in dem gezeigten Ausführungsbeispiel als endlos umlaufendes Förderband 164 ausgebildet ist. Das Trägerelement 202 ruht auf drei Auflageelementen 210, wie in der linken Detaildarstellung gezeigt und wird von einer Bandlage 166 überdeckt. Im Wiegeschritt werden also die Werkstücke 150 oder Werkstückstapel 152 zusammen mit dem Anteil der Bandlage 166 gewogen, die auf dem Trägerelement 202 aufliegt. An das Fördermittel 162 schließt sich die Konfektionierungseinheit 522 oder die Ausleiteinheit 512 an.

Die Waage 200 ist datenleitend mit der Auswerteeinheit 300 und der Steuereinheit 320 verbunden, was durch die strichpunktierten Linien als Datenleitungen 304 skizziert dargestellt ist. Die Datenleitungen 304 können mehradrig sein. Insbesondere können die Datenleitungen 304 kombinierte Daten- und Stromleitungen sein, wie beispielsweise bei einem IO-Link oder SPE mit DoPL (Single Pair Ethernet mit Data over Powerline). Die Steuereinheit 320 ist mit weiteren Aggregaten und Devices verbunden, wie skizziert durch strichpunktierte Linien dargestellt.

Zur Vorformung von Werkstücken 150 wird das Saugwerkzeug 510 in den mit einer Fasermaterial enthaltenden Pulpe als wässrige Phase gefüllten Zuführungstank 520 abgesenkt und eine definierte Schicht an feuchtem Fasermaterial an die Kontur des siebartigen Saugwerkzeuges 510 mittels der Vakuumpumpe 142 angesaugt. In der Leitung zwischen Vakuumpumpe 142 und Saugwerkzeug 510 kann ein Drucksensor 210 vorgesehen sein, über den der Druck in der Saugleitung und hierüber auch der Verschmutzungsgrad des Saugwerkzeugs 510 erfassbar ist, insbesondere in der Zusammenschau und Korrelation mit der Leitungsaufnahme der Vakuumpumpe 142, die über einen integrierten Sensor erfassbar ist. Nachfolgend wird diese definierte Schicht in der ersten Formungsstation 506 entwässert und vorgepresst. Dies erfolgt bei einer Temperatur im Bereich von 30°C bis 80°C und einem Druck im Bereich von 0,2 N/mm² bis 0,3 N/mm². Anschließend erfolgt, nach Überleitung der vorgeformten Werkstücke in ein Heißpresswerkzeug 134 der zweiten Formungsstation 508 die finale Ausformung der Werkstücke 150. Diese zweite Formungsstation 508 ist hierbei als Haupt- oder Heißformstation ausgebildet.

Die Ausformung in der zweiten Formungsstation 508 erfolgt bei einem (Haupt-)Druck im Bereich von 0,5 N/mm² bis 2,0 N/mm² und einer Temperatur von 100 °C bis 250 °C. Dieses Verfahren ist dem Grunde nach bekannt. Bei einer nicht dargestellten Variante des Verfahrens erfolgt die finale Ausformung der Werkstücke in einem einzigen Heiß- und Pressschritt, was in der Regel energetisch allerdings sehr aufwändig ist.

Die Steuereinheit 320 wirkt in nicht näher gezeigter Weise steuernd und regelnd auf die Herstellungsvorrichtung ein und empfängt, ebenfalls in bekannter Weise, Mess- und/oder Zustandsdaten von den Aggregaten, Aktoren sowie den Sensoren und Sensoreinheiten und wertet diese aus. Dieser Empfang und die Auswertung von Mess- und Zustandsdaten kann parallel zum Empfang und der Auswertung von Mess- und Zustandsdaten der Auswerteeinheit 300 erfolgen.

Wie in der linken Detailzeichnung erkennbar, ist das Tragelement 202 der Waage 200 auf drei Auflageelementen 210 angeordnet, deren drei Kontaktstellen 220 mit dem Tragelement ein dreieckiges Kontaktmuster 222 bilden. Die Haupttransportrichtung ist von rechts nach links in der Bildebene, so dass die Gruppe von Werkstücken eine Anordnung von 3 Zeilen und 4 Spalten bildet, was den 12 Formungselementen des zugehörigen Formwerkzeugs 516 entspricht. Durch die Gewichtsverteilung auf die drei Auflageelemente 210 und/oder der Lage des Ist-Schwerpunkts 238 relativ zu dem Soll-Schwerpunkt 236, kann das Gewicht eines einzelnen Werkstücks 150 abgeschätzt oder konkret bestimmt werden, wie insbesondere in den nachstehenden Figuren noch näher ausgeführt wird.

Wie weiterhin in der linken Detaildarstellung erkennbar, besteht der Regelkreis 254 darin, dass die Gruppe der Werkstücke 150 gewogen wird, ggf. aus Lage auf bereits gewogenen Werkstücken 150 gewogen wird und nachfolgend eine Referenzierung 214 erfolgt. Die Referenzierung 214 besteht in der Bildung des Taras und/oder einer Nullwertbildung des bereits belasteten Trägerelements. Anschließend erfolgt die Positionierung der nächsten Werkstückgruppe 150 und deren Wiegung, bis die Endhöhe der Werkstückstapel 152 mit der gewünschten Lagenanzahl erreicht ist. Anschließend erfolgt die Ausleitung durch die Ausleiteinheit 512 und/oder die Überleitung zu der Konfektionierungseinheit 522.

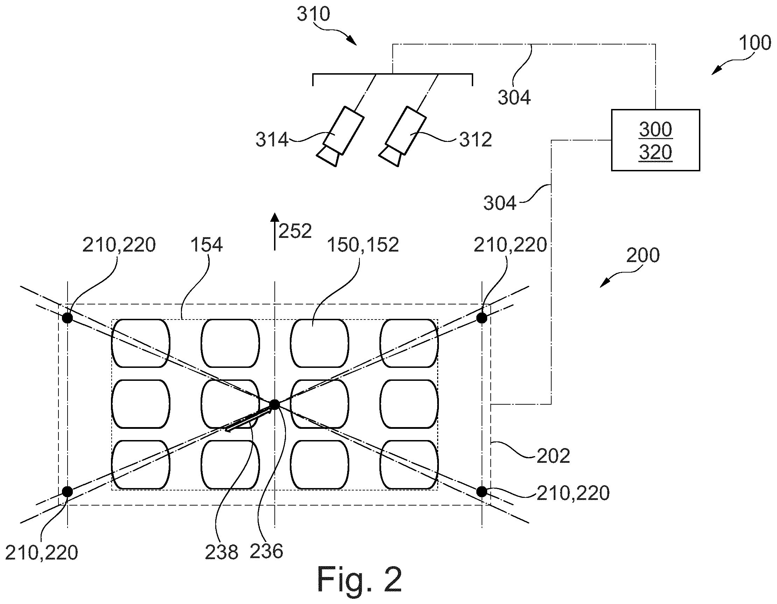

In der Figur 2 ist schematisch die Waage 200 in einer Draufsicht auf das Trägerelement 202 gezeigt. Das Trägerelement 202 ist auf vier Auflageelementen 210 angeordnet, die als Kontaktmuster 222 ein Rechteck formen. Auf dem Tragelement 202 sind ebenfalls 12 Werkstücke 150 positioniert, die die aufgrund der Haupttransportrichtung 252 eine Gruppe von Werkstücken 150 aus 3 Zeilen und 4 Spalten bilden.

Aufgrund der Geometrie des Tragelements 202 als rechteckige Platte und die symmetrische Auflage des Tragelements 202 auf den vier Auflageelementen 210 und aufgrund der idealen, symmetrischen Positionierung der 12 Werkstücke 150, ist der Soll-Schwerpunkt 236 bei einem Wiegeschritt im Zentrum des Tragelements 202, also im Schnittpunkt der Diagonalen des Tragelements und/oder der Verbindungslinien der Kontaktstellen 220, da die Kontaktstellen 220 ebenfalls symmetrisch unterhalb des Tragelements 202 verteilt angeordnet sind.

Zum besseren Verständnis sind in der Figur 2 und weitern Figuren gestrichelte Hilfslinien eingezeichnet, wie beispielsweise die Diagonalen oder die Mittellinie, wobei diese Hilfslinien nicht mit Bezugszeichen versehen sind.

Sobald mindestens ein Werkstück 150 ein zu den anderen Werkstücken 150 unterschiedliches Gewicht aufweist, ändert sich die Gewichtsverteilung an den vier Auflageelementen 210 und damit auch der resultierende Ist-Schwerpunkt 238, was vorliegend immer die Ist-Schwerpunktlage meint. In dem gezeigten Ausführungsbeispiel ist beispielsweise das Gesamtgewicht der Gruppe an Werkstücken 150 gesunken und der Ist-Schwerpunkt 238 hat sich entlang der Diagonale nach links unten verschoben. Somit kann darauf geschlossen werden, dass das Werkstück 150 in der oberen rechten Ecke zu wenig Material hat. Da die Werkstücke 150 in diskreten Abschnitten des Saugwerkzeugs 510 vorgeformt werden, kann mit hoher statistischer Wahrscheinlichkeit darauf geschlossen werden, dass das Werkstück 150 in der rechten oberen Ecke im Wesentlichen um diesen Gewichtsanteil leichter ist. Weiterhin kann hieraus mit hoher Wahrscheinlichkeit darauf geschlossen werden, dass eine verstärkte Verschmutzung in diesem Bereich des Saugwerkzeugs 510 vorliegt.

In analoger Weise ist aus der Lage des Ist-Schwerpunktes 238 relativ zu dem erwarteten Soll-Schwerpunkt 236 eine Vielzahl von Abschätzungen ableitbar, die das Gewicht der einzelnen Werkstücke 150 betreffen und auch den Zustand einzelner Werkzeuge und/oder von Prozessparameter.

Steigt beispielsweise das Gesamtgewicht der Gruppe über die Zeit an, d. h. das Gesamtgewicht einer Gruppe relativ zu vorherigen Gruppen von Werkstücken, kann beispielsweise daraus geschlossen werden, dass entweder die Entwässerung in der ersten Formungsstation 506 nicht in der gewünschten Qualität erfolgt und/oder die Heizleitung in der zweiten Formungsstation 508 mangelhaft ist. Aus dem Gradienten der Veränderung kann weiterhin abgeleitet werden, ob der Herstellungsprozess und damit die Herstellungsvorrichtung unmittelbar gestoppt werden muss oder eine Weiterproduktion unter ggf. angepassten Bedingungen, wie beispielsweise einer verlängerten Behandlung in einer oder beiden Formungsstationen, ausreichend ist, bis ggf. eine gewünschte Charge an Werkstücken komplettiert ist und die Herstellungsvorrichtung einem routinemäßigen Reinigungsprozess unterzogen wird.

In der Figur 2 ist weiterhin eine Sensoreinheit 310 umfasst, die zwei Sensoren 312, 314 aufweist. Diese Sensoreinheit 310 bzw. die beiden Sensoren 312, 314 sind mit der Auswerteeinheit 300 und/oder der Steuerungseinheit 320 datenleitend verbunden.

In dem gezeigten Beispiel ist der erste Sensor 312 ein 3D-Laserscanner, mittels welchem die Topologie des Werkstücks 150 erfassbar ist und/oder die Oberflächenrauheit oder Oberflächenebenheit erfassbar ist. Diese Messwerte geben insbesondere, aber nicht ausschließlich Auskunft über die mechanischen Einflüsse durch die vorherigen Werkzeuge. Der zweite Sensor 314 ist eine Wärmebildkamera, deren Messwerte geben insbesondere, aber nicht ausschließlich Auskunft über die bereichsweise Heizleistung der zweiten Formungsstation 508 und die dortigen Formwerkzeuge 516. Aus diesen Messwerten können beispielsweise in der gemeinsamen Schau mit der abgenommenen elektrischen Leistung für die Heizung und ggf. charakteristischen Verläufen Abschätzungen abgeleitet werden, ob ein hoher Verschmutzungsgrad in dem Werkzeug 516 vorliegt, so dass nicht mehr die gesamte Wärmemenge in das Werkstück 150 übertragen wird.

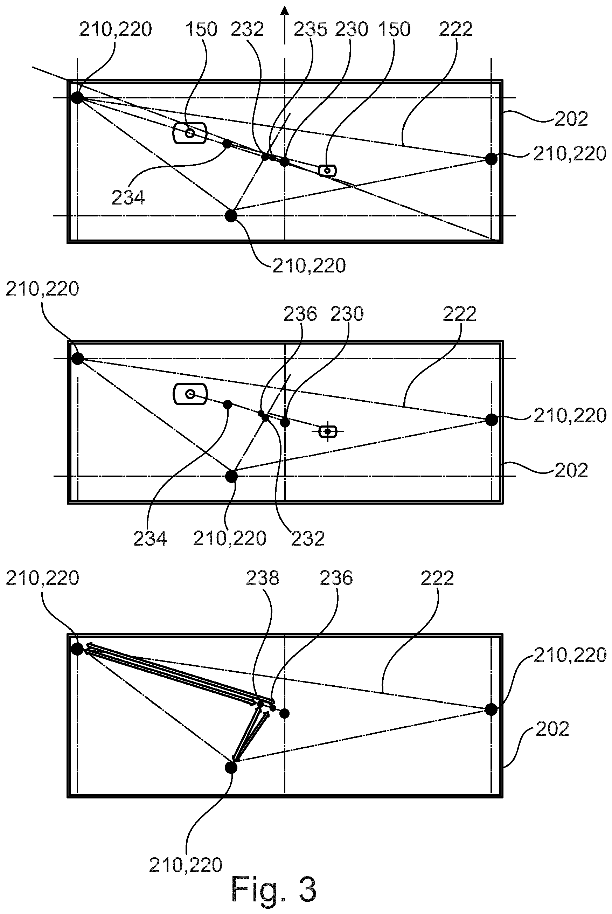

In der Figur 3 ist in drei Teilbildern die Lage der unterschiedlichen Schwerpunkte auf dem Tragelement 202 der Waage 100 dargestellt, wobei zur Veranschaulichung zwei sehr ungleich große und damit entsprechend unterschiedlich schwere Werkstücke 150 aufgelegt sind, die aus demselben Ausgangsmaterial gebildet sind. Das rechteckige Tragelement 202 hat einen Schwerpunkt 230, der auf dem Schnittpunkt der Diagonalen und/oder dem Schnittpunkt der Mittellinien der Seiten liegt. Die Kontaktstellen 220 bilden in dem dargestellten Beispiel ein beliebiges Dreieck als Kontaktmuster 222, dessen Schwerpunkt 232 in bekannter Weise auf dem Schnittpunkt der Strecken liegt, die von den Seitenmitten zu den jeweiligen gegenüberliegenden Ecken verlaufen.

Somit ergibt sich ein resultierender Schwerpunkt 235 aus dem Tragelement 202 und dem dreieckigen Kontaktmuster 222, der auf der Verbindungstrecke dieser beiden Schwerpunkte liegt, als theoretischer Soll-Schwerpunkt bei einem leeren Tragelement 202, wie im oberen Teilbild der Figur 3 dargestellt ist.

In dem oberen und dem mittleren Teilbild ist weiterhin dargestellt, dass die Gruppe aus den beiden Werkstücken 150 einen gemeinsamen Schwerpunkt 234 aufweist, der auf der Verbindungsstrecke zwischen den Schwerpunkten der einzelnen Werkstücke 150 liegt und deutlich näher benachbart zu dem linken, größeren Werkstück 150 angeordnet ist.

Schließlich liegt der Soll-Schwerpunkt 236, der sich nach der idealen Positionierung der ideal gewichtigen Werkstücken 150 auf dem Tragelement 202 ergibt, auf der Verbindungsstrecke zwischen dem resultierenden Schwerpunkt 235 und dem Schwerpunkt 234 der Gruppe der Werkstücke 150, wie in dem mittleren Teilbild dargestellt ist.

Wie in dem unteren Teilbild dargestellt, resultiert der Soll-Schwerpunkt 236 aus den als Doppelpfeilen dargestellten Gewichtsanteilen, die von den Auflageelementen 210 an den drei Kontaktstellen 220 gemessen werden. Der Gewichtsanteil korreliert mit der Länge des jeweiligen Doppelpfeils. Weist nun beispielsweise das größere Werkstück 150 eine größere Masse auf und/oder das kleiner Werkstück 150 eine zu kleine Masse auf, verschiebt sich der erfasste Ist-Schwerpunkt 238 in Richtung zu dem größeren Werkstück 150, dem Fall, der in dem unteren Teilbild gezeigt ist. Aus dem Gesamtgewicht und der Lage des Ist-Schwerpunktes 238 lässt sich bei diesen zwei Werkstücken 150 eindeutig das Gewicht beider Werkstücke 150 bestimmen.

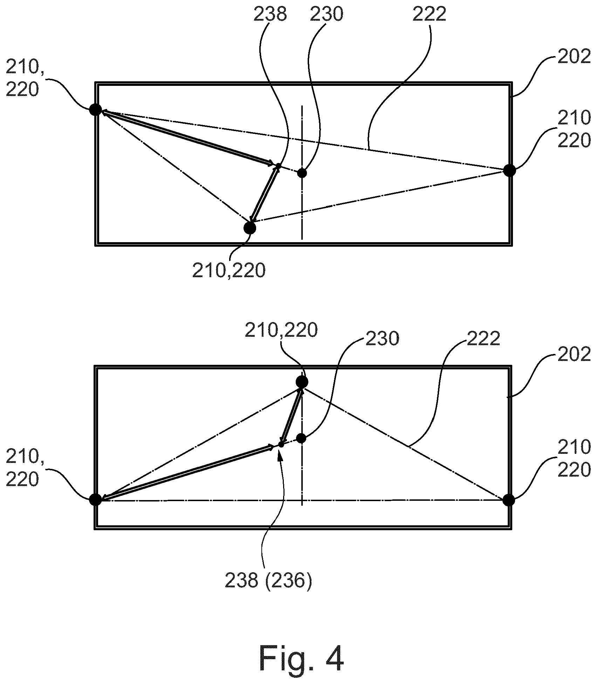

In der Figur 4 ist im oberen Teilbild eine zur Figur 3 identische Anordnung gezeigt, wobei nicht alle Schwerpunkte dargestellt sind, nur der Schwerpunkt 230 des Trägerelements 202 und der gemessene Ist-Schwerpunkt 238, der sich aus den gemessenen Gewichtsanteilen der drei Auflageelemente 210 ergibt. In dem unteren Teilbild wurde das Trägerelement 202 um 180° gedreht und die drei Auflageelemente 210 der Waage 200 oder eine weiteren Waage 200 als gleichseitiges Dreieck angeordnet. Somit kann in einem weiteren Messschritt eine Überprüfung der vorherigen Messung erfolgen, denn bei dem bekannten, identischen Gesamtgewicht der beiden Werkstücke 150 und dem ermittelten Ist-Schwerpunkt 238 liegt für diesen zweiten Messschritt ein zweiter Soll-Schwerpunkt 236 auf Basis des gemessenen Ist-Schwerpunkts 234 aus dem ersten Messschritt vor und die veränderten Positionen der Kontaktstellen 220 führen zu einer unterschiedlichen Spreizung und damit einer neuen Verteilung der erfassbaren Gewichtsanteile bei den drei Auflageelementen 210. Durch einen solchen zweiten Messschritt können insbesondere zufällig auftretende, gegenläufige Effekte identifiziert werden.

Dies könnte beispielsweise eine Gewichtszunahme bei einer Teilzahl von Werkstücken 150 bei gleichzeitiger Gewichtsabnahme bei einer anderen Teilzahl von Werkstücken 150 sein, die aufgrund einer Symmetrie der Auflageelemente 210 und der Symmetrie der Gruppe von Werkstücken 150 zu keiner oder nur einer unwesentlichen Verschiebung des Ist-Schwerpunktes 238 führt. Dieser Fall ist auch nicht unwahrscheinlich, weil beispielsweise der Verschluss in Teilbereichen des Saugwerkzeugs 510 bei der Anlagerung von Ausgangsmaterial zu einem verstärkten Ansaugen von Ausgangsmaterial in anderen Teilbereichen des Saugwerkzeugs 510 führt, wenn die Teilbereiche über einen gemeinsamen Innenraum oder innere Kanäle pneumatisch verbunden sind.

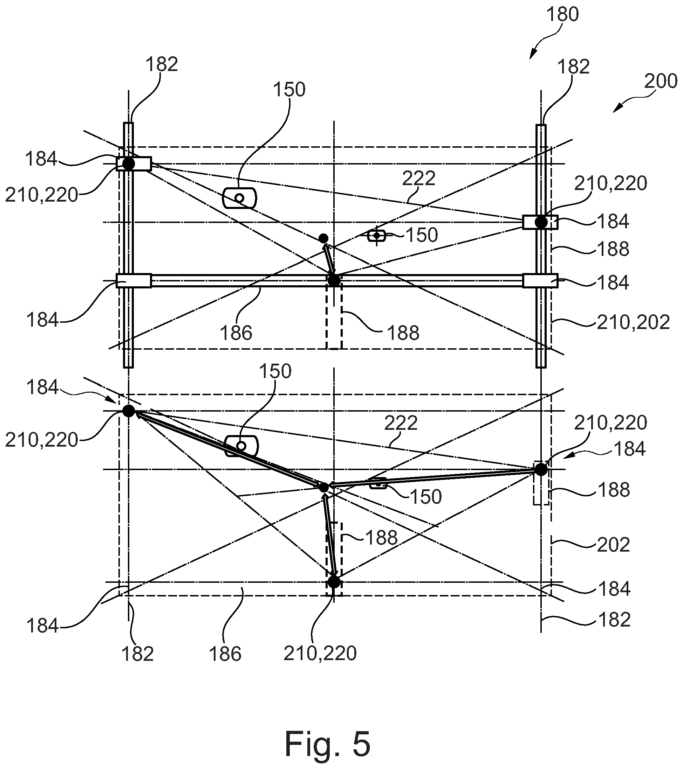

In der Figur 5 ist ein Ausführungsbeispiel gezeigt, in dem die Waage 200 von einem Linearantrieb 180 getragen und angetrieben wird beziehungsweise wird die Waage 200 auch Komponenten des Linearantriebs 180 gebildet oder hierdurch komplettiert. Der Linearantrieb weist vier einzelne Mover 184 aufweist, die auf zueinander parallelen Antriebschienen 182 verfahrbar geführt und angetrieben sind. Die Mover 184 sind gleichzeitig die Auflageelemente 210 der Waage 210 oder tragen die Auflageelemente 210, wobei die Kontaktstellen 220 mit dem Tragelement 202 in analoger Weise gegeben sind, wie vorstehend beschrieben. Das Tragelement 202 ist als Fördertableau ausgebildet. Das Tragelement 202 wird analog zu Figur 3 oder 4 von drei Auflageelementen 210 getragen, über die die Gewichtsanteile gemessen werden, wobei diese gemeinsam ein dreieckiges Kontaktmuster 222 ergeben. Zwei der Mover 184 weisen ein einzelnes Auflageelement 210 auf und ein Paar von Movern 184 ist über ein Tragelement 186 starr verbunden, in dessen Mitte das dritte Auflageelement 210 angeordnet ist. Die Waage 200 ist somit als statische Waage 200 ausgebildet und nutzbar, wobei im Wiegeschritt die Werkstücke 150
- nicht bewegt werden und die Werkstücke 150 und/oder
- mindestens zeitweise bewegt werden,
wobei die Werkstücke 150 keine Relativgeschwindigkeit zur Waage 200 aufweisen.

Der Antrieb der Mover 184 kann in unterschiedlichen Arten erfolgen, wobei bei einer vorteilhaften Ausführungsform, die hier als Alternative gegeben ist, der Linearantrieb 180 ein elektromagnetischer Linearantrieb 180 ist, der bspw. als vertikal ausgebildete, ovale Strecke auf zwei parallelen Strecken gebildet ist. Die Mover 184 sind voneinander unabhängig regelbar. In dem gezeigten Ausführungsbeispiel der beiden Teilbilder der Figur 5 ist das oben links gezeigte Auflageelement 210 in einer festen Positionierung unterhalb des Trägerelements 202. Das rechte, mittlere Auflageelement 210 und das untere, zentrale Auflageelement 210 sind beide in parallelen Führungskurven 188 gelagert und geführt, die ebenfalls unterhalb des Trägerelements 202 angeordnet sind, so dass die relative Lage der Auflageelemente 210 zueinander verändert werden kann.

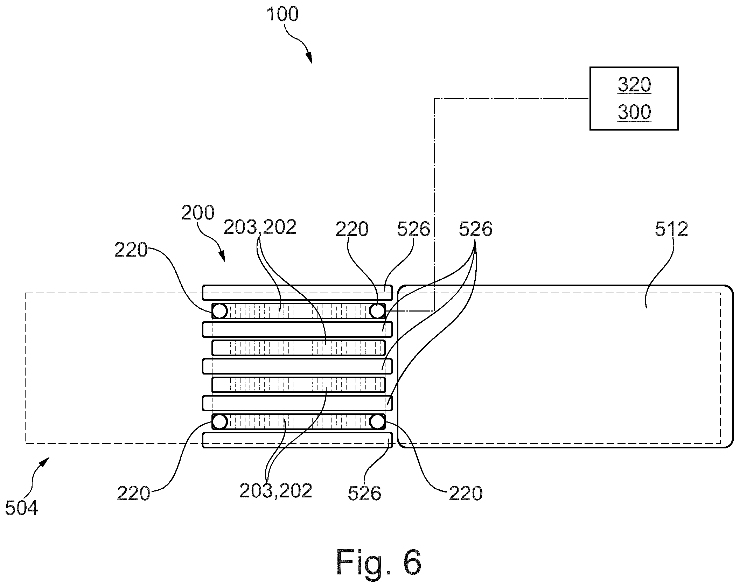

Bei dem Ausführungsbeispiel der Figur 6 ist die Waage 200 des Wiegesystems 100 umfasst, die mit einer Einheit verbunden ist, die die Steuereinheit 320 und die Auswerteeinheit 300 umfasst. Weiterhin ist das Transportelement 202 der Waage 200 aus einer Mehrzahl von Transportschienen 203 gebildet, die auf einem gemeinsamen Trägerelement (nicht dargestellt) angebracht sind. Das Trägerelement ruht in dem gezeigten Beispiel auf vier Auflageelementen 210. Zwischen und seitlich von den Tragschienen 203 des Transportelementes 202 sind fünf schmale Transportbänder 526 angeordnet, die einzeln oder gemeinsam antreibbar sind. Werden Werkstücke 150 von Formungseinheit 504 ausgestoßen und auf der Waage 200 oder einem vorlaufenden Transportmittel positioniert und auf das Transportelement 202 der Waage 200 übergeleitet, kann in dem Wiegeschritt eine Wiegung erfolgen, wie vorsehend beschrieben. Bei einer alternativen Ausführungsform sind die Transportschienen 203 oder das gesamte Transportelement 202 in vertikaler Richtung verfahrbar gelagert und/oder die einzelnen oder die gesamte Gruppe der schmalen Transportbänder 526 sind in vertikaler Richtung verfahrbar gelagert, so dass die Werkstücke 150 außer Kontakt mit den schmalen Transportbändern 526 gebracht werden können. Auf diese Weise ist der Einfluss eines Transportbandes beim Wiegeschritt verhinderbar.

Die Gruppe der schmalen Transportbänder 526 kann ein Teil der Ausleiteinheit 512 sein, ein Teil der Waage 200 und/oder ein Teil einer sonstigen, angrenzenden Einheit, wie beispielsweise der Formungseinheit 504 oder der Konfektionierungseinheit 522.

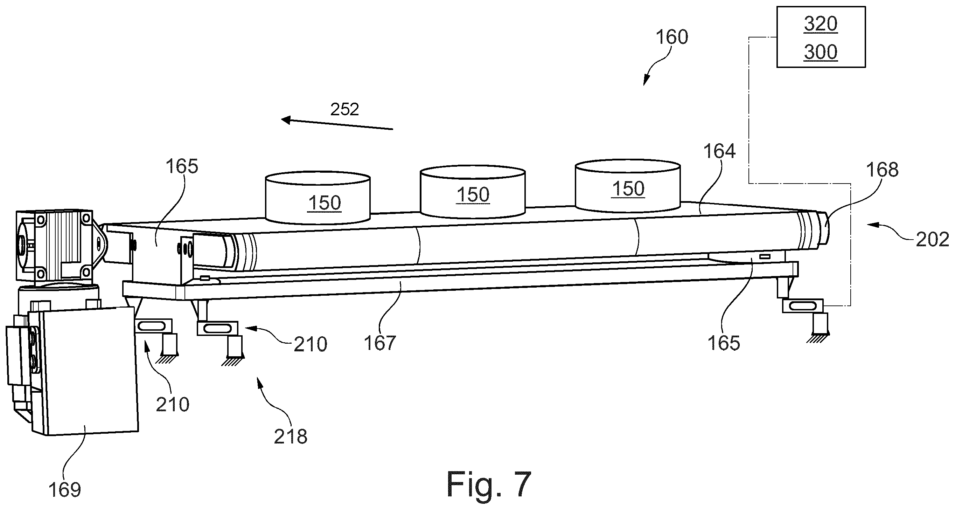

Bei dem Ausführungsbeispiel der Figur 7 ist die Waage 200 als Fördereinheit 160 ausgebildet oder in einer Fördereinheit 160 integriert, indem das Tragelement 202 aus einem plattenartigen Träger 167 gebildet wird, der seitliche Halteabschnitte 165 aufweist, an denen ein mittels Motor 169 endlos umlaufendes und antreibbares Förderband 164 mit zwei Umlenkwalzen 168 schwebend befestigt ist. Im Wiegeschritt werden die auf dem Band stehenden oder transportierten Werkstücke 150 gemeinsam mit dem Tragelement 202 und dem Förderband 164 gewogen, wie hierin ausgeführt wurde. Der Träger kann bei einer alternativen Ausführungsform beispielsweise analog zur Figur 2 verschieblich gelagerte Auflageelemente 210 aufweisen bzw. hiermit verbunden sein. Weiterhin ist die Waage 200 in analoger Weise mit einer Steuereinheit 320 und/oder einer Auswerteeinheit 300 verbunden.

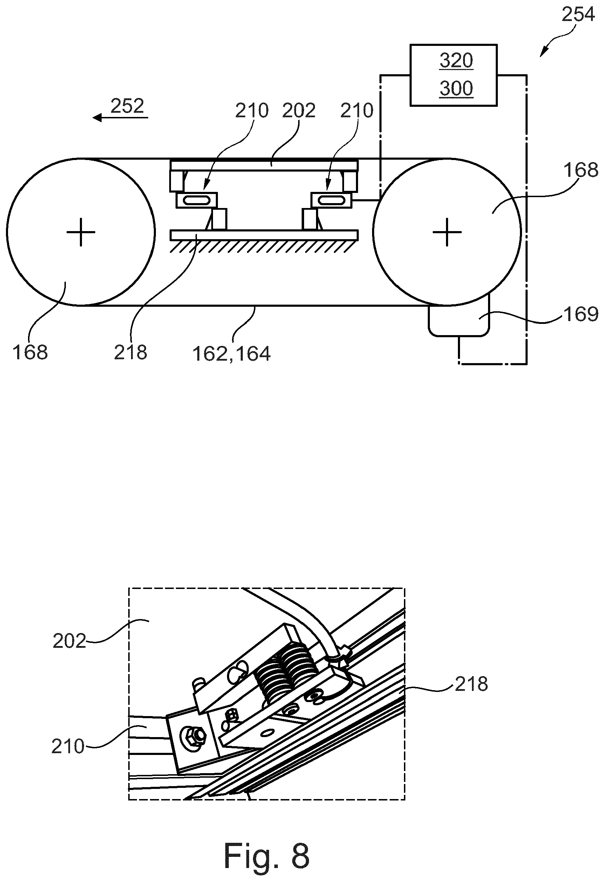

Figur 8 zeigt ein Ausführungsbeispiel in zwei Teilbildern, indem die Tragelemente 202 der Waage 200 zwischen Hintrum (Obertrum) und Rücktrum (Untertrum) eines Förderbandes 164 angeordnet sind. Das obere Teilbild zeigt einen vertikalen Schnitt und das untere Teilbild eine Unteransicht des Tragelements 202 und das dortige Auflageelement 210. Die obere Bandlage 166 (Obertrum) liegt bei dieser Ausführungsform auf dem Tragelement 202 auf und wird im Wiegeschritt gemeinsam mit den jeweiligen Werkstücken 150 gewogen, wobei vorgesehen werden kann, dass mindestens eine Umlenkwalze 168 zu Bandentspannung verfahrbar gelagert ist.

Hierbei können die Waage 200 und das Förderband 164 an einer gemeinsamen Tragstruktur befestigt sein oder die Waage 200 ist an einer eigenen Tragstruktur 218 befestigt, wie in dem gezeigten Beispiel.

### Bezugszeichenliste

- 100: Wiegesystem

- 140: Ausgangswerkstoff
- 142: Vakuumpumpe

- 150: Werkstück, Produkt
- 152: Werkstückstapel, Produktstapel
- 154: Auflagefläche

- 160: Fördereinheit
- 162: Fördermittel
- 164: Förderband
- 165: Halteabschnitt
- 166: Bandlage
- 167: Träger
- 168: Umlenkwalze
- 169: Motor

- 180: Linearantrieb
- 182: Antriebsschiene
- 184: Mover
- 186: Tragelement
- 188: Führungskurven

- 200: Waage
- 202: Trägerelement
- 203: Tragschiene

- 210: Auflageelement
- 216: Referenzierung
- 218: Tragstruktur

- 220: Kontaktstelle
- 222: Kontaktmuster

- 230: Schwerpunk von 202
- 232: Schwerpunkt von 228

- 234: Scherpunkt von 150
- 235: Schwerpunk, resultierender
- 236: Soll-Schwerpunkt
- 238: Ist-Schwerpunkt

- 252: Haupttransportrichtung
- 254: Regelkreis

- 300: Auswerteeinheit
- 302: Eingangsschnittstelle
- 304: Datenleitung

- 310: Sensoreinheit
- 312: Sensor, 3D-Laserscanner
- 314: Sensor, Wärmebildkamera

- 320: Steuereinheit

- 500: Herstellungsvorrichtung
- 502: Materialzuführungseinheit
- 504: Formungseinheit
- 506: Formungsstation, erste
- 508: Formungsstation, zweite
- 510: Saugwerkzeug
- 512: Ausleiteinheit
- 516: Formwerkzeug
- 518: Vorformstation
- 520: Zuführungstank
- 522: Konfektionierungseinheit
- 524: Bewegungseinheit
- 526: Transportband

## Patentansprüche

1. Wiegesystem (100) für eine Herstellungsvorrichtung (500) für Produkte, umfassend mindestens eine elektronisch auswertbare Waage (200), umfassend mindestens ein Trägerelement (202) zur Positionierung von mindestens einem Werkstück (150) oder Werkstückstapel (152), insbesondere einer Gruppe von horizontal benachbarten Werkstücken (150) und/oder Werkstückstapeln (152), und eine mit der Waage (200) verbundene Auswerteeinheit (300), zum Empfang und zur Verwertung von erfassten Wiegedaten,
**dadurch gekennzeichnet, dass**
die Waage (200) im Zusammenwirken mit der Auswerteeinheit (300) ausgebildet ist, das Gesamtgewicht und die horizontale Gewichtsverteilung von mindestens einem auf dem Trägerelement (202) abgelegten Werkstück (150) oder Werkstückstapel (152) zu erfassen, wobei die Waage (200) im Zusammenwirken mit der Auswerteeinheit (300) ausgebildet ist, als Gewichtsverteilung das jeweilige Einzelgewicht von zueinander benachbarten mindesten zwei Werkstücken (150) und/oder Werkstückstapeln (152) zu quantifizieren und zu differenzieren.

2. Wiegesystem (100) nach Anspruch 1, **dadurch gekennzeichnet, dass** die Waage (200) ein oder zwei das Trägerelement (202) zur Ablage direkt oder indirekt tragende Tragsäulen aufweist, welche jeweils mindestens einen Torsionssensor aufweisen, insbesondere zwei oder mehr Torsionssensoren aufweisen, zur mindestens teilweisen Ermittlung der Gewichtsverteilung.

3. Wiegesystem (100) nach einem der vorherigen Ansprüche, **dadurch gekennzeichnet, dass** die Waage (200) mindestens drei Auflageelemente (210) für das Trägerelement (202) aufweist, wobei die Auflageelemente (210) Kraftmesssensoren aufweisen oder solche darstellen, wobei die mindestens drei Auflageelemente (210) in einem Kontaktmuster (222) mit drei nicht in einer Reihe befindlichen Kontaktstellen (220) mit dem Trägerelement (202) verbunden sind, und wobei die mindestens drei Auflageelemente (210) und/oder deren Kraftmesssensoren ausgebildet sind, Messwerte an die Auswerteeinheit (300) zu senden, welche basierend hierauf das Gesamtgewicht und die Gewichtsverteilung ermitteln.

4. Wiegesystem (100) nach einem der vorherigen Ansprüche, **dadurch gekennzeichnet, dass** die Auswertungseinheit (300) mindestens eine Eingabeschnittstelle zum Empfang von Sensordaten und/oder Produktionsdaten umfasst, wobei
- die Sensordaten insbesondere erfasste, geometrische Messwerte und
- die Produktionsdaten insbesondere definierte Soll-Werte
des mindestens einen Werkstücks (150) oder des mindestens einen Werkstückstapels (152) betreffen.

5. Wiegesystem (100) nach einem der vorherigen Ansprüche, **dadurch gekennzeichnet, dass** eine weitere Waage umfasst ist, welche mit der Auswerteeinheit (300) verbunden ist, wobei die weitere Waage eine zur ersten Waage (200)
- unterschiedliche Anordnung der mindestens einen Tragsäule oder unterschiedliches Kontaktmuster (222) der Auflageelemente (210) aufweist oder
- statt der mindestens einen Tragsäule mindestens drei Auflageelemente (210) in einem Kontaktmuster (222) aufweist.

6. Wiegesystem (100) nach einem der vorherigen Ansprüche, **dadurch gekennzeichnet, dass** die mindestens eine Waage (200) in eine Fördereinheit (160) integriert ist, wobei die Fördereinheit (160) als Fördermittel (162)
- ein Förderband (164) umfasst, wobei die Waage (200) in das Förderband (164) derart integriert ist, dass das Trägerelement (202) von mindestens einer Bandlage (166) überdeckt ist
und/oder
- ein Fördermittel (162) umfasst, mittels welchem die Waage (200) mindestens teilweise transportierbar ist, insbesondere ein Transportroboter oder einen Linearantrieb (180), insbesondere ein elektromagnetischer Linearantrieb (180).

7. Wiegesystem (100) nach einem der vorherigen Ansprüche, **dadurch gekennzeichnet, dass** die mindestens eine Waage (200)
- als dynamische Waage ausgebildet ist und entsprechende Bauteile umfasst, um eine dynamische Messung durchzuführen, wobei die Werkstücke bei der Messung relativ zu Waage (200) gefördert werden und/oder
- als statische Waage ausgebildet ist und entsprechende Bauteile umfasst, um eine statische Messung durchzuführen, wobei die Werkstücke bei der Messung relativ zu Waage (200) stehen und nicht gefördert werden, um eine statische Messung durchzuführen.

8. Wiegesystem (100) nach einem der vorherigen Ansprüche, **dadurch gekennzeichnet, dass**
- mindestens ein Auflageelement (210) relativ zum Trägerelement (202) verschieblich gelagert und antreibbar ist und/oder
- das Trägerelement (202) relativ zu mindestens einem Auflageelement (210) verschieblich gelagert und antreibbar ist.

9. Wiegesystem (100) nach einem der vorherigen Ansprüche, **dadurch gekennzeichnet, dass** die mindestens eine Waage (200) auf oder an einem elektromagnetisch Direktantrieb (180) mit mindestens einer Antriebsschiene (182) und mindestens zwei unabhängig voneinander antreibbaren und steuerbaren Movern (184) angeordnet ist und/oder hierdurch gebildet wird.

10. Wiegesystem (100) nach Anspruch 9, **dadurch gekennzeichnet, dass**
- mindestens ein erster Mover (184) oder eine erste Antriebseinheit (186) mindestens ein Auflageelement (210) aufweist und
- mindestens ein weiterer Mover (184) oder eine weitere Antriebseinheit (186) mindestens ein weiteres Auflageelement (210) aufweist.

11. Wiegesystem (100) nach einem der vorherigen Ansprüche 3 bis 10, **dadurch gekennzeichnet, dass** mindestens ein Auflageelemente (210) inaktiviert werden kann und/oder von der jeweiligen Kontaktstelle (220) vertikal entfernt werden kann.

12. Herstellungsvorrichtung (500) für Werkstücke (150), umfassend eine Materialzuführungseinheit (502), eine Formungseinheit (504) und eine Ausleiteinheit (512), wobei die Formungseinheit (504) mindestens eine Formungsstation (506) mit mindestens einem Formwerkzeug (508) und mindestens einer Pressvorrichtung (510) aufweist, wobei das mindestens eine Formwerkzeug (508) an der Pressvorrichtung (510) gehalten und von dieser motorisch angetrieben verfahrbar ist und wobei mindestens eine Steuereinheit (320) vorgesehen ist, mittels welcher mindestens ein Aggregat und/oder ein Device gesteuert und/oder geregelt werden kann,
**dadurch gekennzeichnet, dass**
ein Wiegesystem (100) zur Ermittlung von Wiegedaten von mindestens einem Werkstück (150) und/oder mindestens einem Werkstückstapel (152) nach einem der vorstehenden Ansprüche umfasst ist, wobei das Wiegesystem insbesondere in der Formungseinheit (504) und/oder nach der Formungseinheit (504) angeordnet ist.

13. Herstellungsvorrichtung nach Anspruch 12, **dadurch gekennzeichnet, dass** die mind. eine Formungsstation (506) und/oder deren mind. eine Formwerkzeug (508, 510)
- zum pressenden Formen von Werkstücken (150) aus einem Ausgangswerkstoff (140) ausgebildet ist und/oder
- zum pressenden und heißen Formen von Werkstücken (150) aus einem Ausgangswerkstoff (140) und/oder einer Vorform eines Werkstücks (150) ausgebildet ist, insbesondere zwei Formungsstationen (506) mit jeweils mindestens einem Formwerkzeug (508, 510) umfasst.

14. Herstellungsvorrichtung nach einem der Ansprüche 12 oder 13, **dadurch gekennzeichnet, dass** das Wiegesystem (100) eine Waage (200) umfasst, die stromabwärts zum mindestens einen Formwerkzeug (508, 510) zum pressenden Formen von Werkstücken (150) aufweist und insbesondere stromabwärts zum Formwerkzeug (510) zum pressenden und heißen Formen von Werkstücken (150) angeordnet ist.

15. Herstellungsvorrichtung nach einem der Ansprüche 12 bis 14, **dadurch gekennzeichnet, dass** Auswerteeinheit (300) mit der Steuereinheit (320) derart datenleitend verbunden, funktional ausgebildet sind und interagieren, insbesondere entsprechende Softwareprogramme nutzen, so dass die Steuereinheit (320) basierend auf den von der Auswerteeinheit (300) erhaltenen Wiegedaten mindestens ein Aggregat und/oder ein Device mindestens zweiweise gesteuert und/oder geregelt werden kann, insbesondere mindestens ein Aggregat und/oder ein Device stromaufwärts zur Waage (200) mindestens zweiweise gesteuert und/oder geregelt werden kann.

16. Herstellungsvorrichtung nach einem der Ansprüche 12 bis 15, **dadurch gekennzeichnet, dass** mindestens eine Formungsstation (506) und/oder mindestens ein Formwerkzeug (508, 510) ausgebildet ist, eine Gruppe von zwei oder mehr Werkstücken (150) zu formen und Entlassmittel umfasst und/oder ausgebildet ist, um einzelne Werkstücke (150) und/oder Gruppen von Werkstücken (150) gesteuert zu entlassen und/oder zu halten.

17. Verfahren zum Betrieb einer Herstellungsvorrichtung (500) nach Anspruch 12, umfassend die Schritte:
- Bereitstellung eines Ausgangsmaterials (140)
- Einbringen eines Ausgangsmaterials (140) in eine Formungseinheit (504), wobei die Formungseinheit (504) mindestens eine Formungsstation (506) mit mindestens einem Formwerkzeug (508) und mindestens einer Pressvorrichtung (510) aufweist,
- Formung mindestens eines Werkstücks (150), insbesondere einer Gruppe von Werkstücken (150) mittels des Formwerkzeugs (508),
**dadurch gekennzeichnet, dass**
stromabwärts der Formungsstation (506) mittels einer Waage (200) eines Wiegesystems (100) in einem Wiegeschritt das Gesamtgewicht und die horizontale Gewichtsverteilung von mindestens einem auf dem Trägerelement (202) positionierten Werkstück (150) oder Werkstückstapel (152) erfasst wird, insbesondere eine Gruppe von zwei oder mehr positionierten Werkstücken (150) oder Werkstückstapeln (152) erfasst wird,
wobei in dem Wiegeschritt Wiegedaten ermittelt und an eine Auswerteeinheit (300) geleitet werden, wobei die Auswerteeinheit (300) die Wiegedaten an eine Steuereinheit (320) leitet und basierend hierauf und der Nutzung und/oder Einbindung von Soll-Wertvorgaben, insb. Algorithmen, Wertetabellen und/oder KI, mindestens
- ein Aggregat und/oder ein Device mindestens zweiweise gesteuert und/oder geregelt wird und/oder
- eine Hinweis- und/oder Warnsignal an eine Ausgabeeinheit gesendet wird, insb. eine HMI, einen optischen oder akustischen Signalgeber.

18. Verfahren nach Anspruch 17, **dadurch gekennzeichnet, dass** nach der gemeinsamen Formung von mindestens zwei Werkstücken (150) eine schrittweise Wiegung für eine Anzahl von Werkstücklagen größer oder gleich 2 erfolgt, insbesondere eine lagenweise Wiegung der Werkstücke (150) erfolgt.

19. Verfahren nach Anspruch 17, **dadurch gekennzeichnet, dass** nach der gemeinsamen Formung einer Gruppe von mindestens zwei Werkstücken (150) eine mehrfache Wiegung vor einer nächsten Formung einer nächsten Gruppe von Werkstücken (150) erfolgt, indem unabhängig eine Teilanzahl an Werkstücken (150) der gemeinsam geformten Gruppe (154) in Teilwiegungen gewogen wird.

20. Verfahren nach einem der Ansprüche 17 bis 19 **dadurch gekennzeichnet, dass** der Wiegeschritt nach der ersten Formung und einer weiteren Formung erfolgt.

21. Verfahren nach Anspruch 19 bis 20, **dadurch gekennzeichnet, dass** das Wiegesystem (100) nach einem der Ansprüche 1 bis 11 ausgebildet ist.

## Claims

1. A weighing system (100) for a manufacturing device (500) for products, comprising at least one electronically evaluable scale (200) comprising at least one carrier element (202) for positioning at least one workpiece (150) or workpiece stack (152), in particular a group of horizontally adjacent workpieces (150) and/or workpiece stacks (152), and an evaluation unit (300) connected to the scale (200) for receiving and evaluating recorded weighing data,
**characterized in that**
the scale (200) is designed to detect, in cooperation with the evaluation unit (300), the total weight and the horizontal weight distribution of at least one workpiece (150) or workpiece stack (152) placed on the carrier element (202), the scale (200) being designed to quantify and differentiate, in cooperation with the evaluation unit (300), the respective individual weight of at least two adjacent workpieces (150) and/or workpiece stacks (152) as a weight distribution.

2. The weighing system (100) according to claim 1, **characterized in that** the scale (200) has one or two support columns which directly or indirectly support the support element (202) for placement, each of which has at least one torsion sensor, in particular two or more torsion sensors, for determining the weight distribution at least partially.

3. The weighing system (100) according to any one of the preceding claims, **characterized in that** the scale (200) has at least three support elements (210) for the carrier element (202), wherein the support elements (210) have or constitute force-measuring sensors, wherein the at least three support elements (210) are connected to the carrier element (202) in a contact pattern (222) with three contact points (220) that are not in a row, and wherein the at least three support elements (210) and/or the force-measuring sensors thereof are designed to send measured values to the evaluation unit (300) which determine, based thereon, the total weight and the weight distribution.

4. The weighing system (100) according to any one of the preceding claims, **characterized in that** the evaluation unit (300) comprises at least one input interface for receiving sensor data and/or production data, wherein
- the sensor data relate, in particular, to recorded geometric measured values and
- the production data relate, in particular, to defined target values of the at least one workpiece (150) or of the at least one workpiece stack (152).

5. The weighing system (100) according to any one of the preceding claims, **characterized in that** an additional scale is included which is connected to the evaluation unit (300), the additional scale having, relative to the first scale (200),
- a different arrangement of the at least one support column or a different contact pattern (222) of the support elements (210) or,
- instead of the at least one support column, at least three support elements (210) in a contact pattern (222).

6. The weighing system (100) according to any one of the preceding claims, **characterized in that** the at least one scale (200) is integrated into a conveyor unit (160), wherein the conveyor unit (160) comprises
- a conveyor belt (164) as a conveying means (162), the scale (200) being integrated into the conveyor belt (164) such that the carrier element (202) is covered by at least one belt layer (166)
and/or
- a conveying means (162) by means of which the scale (200) can be transported at least partially, in particular a transport robot or a linear drive (180), in particular an electromagnetic linear drive (180).

7. The weighing system (100) according to any one of the preceding claims, **characterized in that** the at least one scale (200) is embodied
- as a dynamic scale and comprises corresponding components for carrying out a dynamic measurement, the workpieces being conveyed relative to the scale (200) during the measurement and/or
- as a static scale and comprises corresponding components for carrying out a static measurement, the workpieces being positioned relative to the scale (200) during the measurement and not being conveyed in order to carry out a static measurement.

8. The weighing system (100) according to any one of the preceding claims, **characterized in that**
- at least one support element (210) is displaceably mounted and drivable relative to the carrier element (202) and/or
- the carrier element (202) is displaceably mounted and drivable relative to at least one support element (210).

9. The weighing system (100) according to any one of the preceding claims, **characterized in that** the at least one scale (200) is arranged on or at an electromagnetic direct drive (180) with at least one drive track (182) and at least two independently drivable and controllable movers (184) and/or is formed by the same.

10. The weighing system (100) according to claim 9, **characterized in that**
- at least one first mover (184) or one first drive unit (186) has at least one support element (210), and
- at least one additional mover (184) or one additional drive unit (186) has at least one additional support element (210).

11. The weighing system (100) according to any one of preceding claims 3 to 10, **characterized in that** at least one support element (210) can be deactivated and/or removed vertically from the respective contact point (220).

12. A manufacturing device (500) for workpieces (150), comprising a material feed unit (502), a forming unit (504), and a discharge unit (512), wherein the forming unit (504) has at least one forming station (506) with at least one forming tool (508) and at least one pressing device (510), wherein the at least one forming tool (508) is held on the pressing device (510) and is movable by means of a motor drive, and wherein at least one control unit (320) is provided by means of which at least one unit and/or one device can be controlled and/or regulated,
**characterized in that**
a weighing system (100) for determining weighing data of at least one workpiece (150) and/or of at least one workpiece stack (152) according to any one of the preceding claims is included, the weighing system being arranged particularly in the forming unit (504) and/or downstream from the forming unit (504).

13. The manufacturing device according to claim 12, **characterized in that** the at least one forming station (506) and/or the at least one forming tool (508, 510) thereof is designed
- for the pressing-type formation of workpieces (150) from a starting material (140) and/or
- for the pressing and hot forming of workpieces (150) from a starting material (140) and/or from a preform of a workpiece (150), in particular comprising two forming stations (506), each with at least one forming tool (508, 510).

14. The manufacturing device according to any one of claims 12 or 13, **characterized in that** the weighing system (100) comprises a scale (200) which is arranged downstream from the at least one forming tool (508, 510) for the press-forming of workpieces (150) and, in particular, downstream from the forming tool (510) for the press-forming and hot forming of workpieces (150).

15. The manufacturing device according to any one of claims 12 to 14, **characterized in that** the evaluation unit (300) and the control unit (320) are connected in a data-conducting manner, are functionally designed, and interact, in particular use corresponding software programs, so that the control unit (320) at least one unit and/or one device can be controlled and/or regulated at least intermittently based on the weighing data received from the evaluation unit (300), in particular at least one unit and/or one device upstream from the scale (200) can be controlled and/or regulated at least intermittently.

16. The manufacturing device according to any one of claims 12 to 15, **characterized in that** at least one forming station (506) and/or at least one forming tool (508, 510) is designed to form a group of two or more workpieces (150) and comprises release means and/or is designed to release and/or hold individual workpieces (150) and/or groups of workpieces (150) in a controlled manner.

17. A method for operating a manufacturing device (500) according to claim 12, comprising the steps:
- providing a starting material (140)
- introducing a starting material (140) into a forming unit (504), the forming unit (504) having at least one forming station (506) with at least one forming tool (508) and at least one pressing device (510),
- forming at least one workpiece (150), in particular a group of workpieces (150), by means of the forming tool (508),
**characterized in that,**
downstream from the forming station (506), the total weight and the horizontal weight distribution of at least one workpiece (150) or workpiece stack (152) positioned on the carrier element (202) is detected by means of a scale (200) of a weighing system (100) in a weighing step, a group of two or more positioned workpieces (150) or workpiece stacks (152) being detected in particular, wherein, in the weighing step, weighing data are determined and sent to an evaluation unit (300), the evaluation unit (300) sending the weighing data to a control unit (320) and, based thereon and the use and/or integration of target value specifications, in particular algorithms, value tables, and/or Al,
- at least one unit and/or one device is controlled and/or regulated at least intermittently and/or
- at least one informational and/or warning signal is sent to an output unit, in particular an HMI, a visual or acoustic signal generator.

18. The method according to claim 17, **characterized in that,** after the joint forming of at least two workpieces (150), step-by-step weighing is carried out for a number of workpiece layers greater than or equal to 2, a layer-by-layer weighing of the workpieces (150) being carried out in particular.

19. The method according to claim 17, **characterized in that** after the joint forming of a group of at least two workpieces (150), multiple weighing is carried out before a next forming of a next group of workpieces (150) by independently weighing a subset of workpieces (150) of the jointly formed group (154) in partial weighings.

20. The method according to any one of claims 17 to 19, **characterized in that** the weighing step takes place after the first forming and an additional forming.

21. The method according to claims 19 to 20, **characterized in that** the weighing system (100) is designed according to any one of claims 1 to 11.

## Revendications

1. Système de pesage (100) prévu pour un dispositif de fabrication (500) de produits, comprenant au moins une balance à utilisation électronique (200), comprenant au moins un élément de support (202) servant pour le positionnement d'au moins une pièce usinée (150) ou d'une pile de pièces usinées (152), notamment d'un groupe de pièces usinées (150) et/ou de piles de pièces usinées (152) connexes par rapport à l'horizontale, et une unité d'analyse (300) reliée à la balance (200), pour la réception et l'exploitation de données de pesage détectées,
**caractérisé en ce que :**
la balance (200) est réalisée en interaction avec l'unité d'analyse (300) pour détecter le poids total et la répartition horizontale du poids d'au moins une pièce usinée (150) ou d'une pile de pièces usinées (152) déposées sur l'élément de support (202), dans lequel la balance (200) est réalisée en interaction avec l'unité d'analyse (300), pour quantifier et différencier, grâce à la répartition du poids, le poids individuel respectif d'au minimum deux pièces usinées (150) et/ou piles de pièces usinées (152) connexes les unes par rapport aux autres.

2. Système de pesage (100) selon la revendication 1, **caractérisé en ce que** la balance (200) comporte une ou deux potences supportant directement ou indirectement l'élément de support (202) tout en servant de reposoir, lesdites potences comportant respectivement au moins un capteur de torsion, notamment deux capteurs de torsion ou plus afin de déterminer au moins partiellement la répartition du poids.

3. Système de pesage (100) selon l'une quelconque des revendications précédentes, **caractérisé en ce que** la balance (200) comporte au moins trois éléments porteurs (210) prévus pour l'élément de support (202), dans lequel les éléments porteurs (210) comportent des capteurs de mesure de force ou les représentent, dans lequel les au moins trois éléments porteurs (210) sont reliés à l'élément de support (202) dans un modèle de contact (222) avec trois points de contact (220) non alignés et dans lequel les au moins trois éléments porteurs (210) et/ou leurs capteurs de mesure de force sont réalisés pour envoyer des valeurs de mesure à l'unité d'analyse (300), lesdites valeurs déterminant sur cette base le poids total et la répartition du poids.

4. Système de pesage (100) selon l'une quelconque des revendications précédentes, **caractérisé en ce que** l'unité d'analyse (300) comprend au moins une interface de saisie pour recevoir des données de capteur et/ou des données de production, dans lequel :
- les données de capteur concernent notamment les valeurs de mesure géométriques détectées ; et
- les données de production concernent notamment les valeurs théoriques définies
de l'au moins une pièce usinée (150) ou de l'au moins une pile de pièces usinées (152).

5. Système de pesage (100) selon l'une quelconque des revendications précédentes, **caractérisé en ce qu'**une balance supplémentaire est prévue avec laquelle l'unité d'analyse (300) est reliée, dans lequel la balance supplémentaire comporte :
- un agencement différent, par rapport à la première balance (200), de l'au moins une potence ou un modèle de contact (222) différent des éléments porteurs (210) ; ou
- à la place de l'au moins une potence au moins trois éléments porteurs (210) selon un certain modèle de contact (222).

6. Système de pesage (100) selon l'une quelconque des revendications précédentes, **caractérisé en ce que** l'au moins une balance (200) est intégrée dans une unité de transport (160), dans lequel l'unité de transport (160) prenant la forme d'un moyen de transport (162) comprend :
- un tapis de transport (164), dans lequel la balance (200) est intégrée de telle sorte dans le tapis de transport (164) que l'élément de support (202) soit revêtu par au moins une couche de tapis (166) ;
et/ou
- un moyen de transport (162) à l'aide duquel la balance (200) peut être transportée au moins en partie, notamment un robot de transport ou un entraînement linéaire (180), notamment un entraînement linéaire (180) électromagnétique.

7. Système de pesage (100) selon l'une quelconque des revendications précédentes, **caractérisé en ce que** l'au moins une balance (200) :
- est réalisée sous la forme d'une balance dynamique et comprend des composants correspondants, pour réaliser une mesure dynamique, dans lequel les pièces usinées sont transportées par rapport à la balance (200) lors de la mesure ; et/ou
- est réalisée sous la forme d'une balance statique et comprend des composants correspondants, pour réaliser une mesure statique, dans lequel les pièces usinées sont immobiles par rapport à la balance (200) lors de la mesure et ne sont pas transportées, pour réaliser une mesure statique.

8. Système de pesage (100) selon l'une quelconque des revendications précédentes, **caractérisé en ce que** :
- au moins un élément porteur (210) est disposé de façon mobile et est entraîné par rapport à l'élément de support (202) ; et/ou
- l'élément de support (202) est disposé de façon mobile et entraîné par rapport à au moins un élément porteur (210).

9. Système de pesage (100) selon l'une quelconque des revendications précédentes, **caractérisé en ce que** l'au moins une balance (200) peut être disposée sur un système d'entraînement direct électromagnétique (180) ou au niveau de celui-ci à l'aide d'au moins un rail d'entraînement (182) et d'au moins deux propulseurs (184) pouvant être entraînés et commandés et/ou que ladite balance est formée indépendamment d'eux.

10. Système de pesage (100) selon la revendication 9, **caractérisé en ce que**
- au moins un premier propulseur (184) ou une première unité d'entraînement (186) comporte au moins un élément porteur (210) ; et
- au moins un propulseur (184) supplémentaire ou une unité d'entraînement (186) supplémentaire comporte au moins un élément porteur (210) supplémentaire.

11. Système de pesage (100) selon l'une quelconque des revendications 3 à 10 précédentes, **caractérisé en ce qu'**au moins un élément porteur (210) peut être désactivé et/ou peut être éloigné verticalement du point de contact (220) respectif.

12. Dispositif de fabrication (500) de pièces usinées (150), comprenant une unité d'amenée de matière (502), une unité de formage (504) et une unité d'évacuation (512), dans lequel l'unité de formage (504) comporte au moins une station de formage (506) dotée d'au moins un outil de formage (508) et au moins un dispositif de pressage (510), dans lequel l'au moins un outil de formage (508) est maintenu au niveau du dispositif de pressage (510) et peut être déplacé de façon motorisée par lui et dans lequel au moins une unité de commande (320) est prévue à l'aide de laquelle au moins un groupe et/ou un dispositif peut être commandé et/ou réglé,
**caractérisé en ce que :**
un système de pesage (100) est prévu pour calculer des données de pesage provenant d'au moins une pièce usinée (150) et/ou d'au moins une pile de pièces usinées (152) selon l'une quelconque des revendications précédentes, dans lequel le système de pesage est notamment disposé dans l'unité de formage (504) et/ou après l'unité de formage (504).

13. Dispositif de fabrication selon la revendication 12, **caractérisé en ce que** l'au moins une station de formage (506) et/ou son au moins un outil de formage (508, 510) sont réalisés :
- pour réaliser un formage par compression de pièces usinées (150) à partir d'un matériau de départ (140) ; et/ou
- pour réaliser un formage par compression et application de chaleur de pièces usinées (150) à partir d'un matériau de départ (140) et/ou un préformage de pièces usinées (150), et comprend notamment deux stations de formage (506) respectivement équipées d'au moins un outil de formage (508, 510).

14. Dispositif de fabrication selon l'une quelconque des revendications 12 ou 13, **caractérisé en ce que** le système de pesage (100) comprend une balance (200) comportant en aval au moins un outil de formage (508, 510) servant au formage de pièces usinées (150) et conçu en aval de l'outil de formage (510) pour le formage par compression et application de chaleur de pièces usinées (150).

15. Dispositif de fabrication selon l'une quelconque des revendications 12 à 14, **caractérisé en ce qu'**une unité d'analyse (300) et l'unité de commande (320) sont reliées de façon à permettre la transmission de données, à former une unité fonctionnelle et à interagir de telle sorte, notamment en utilisant des programmes logiciels correspondants, que l'unité de commande (320) puisse commander et/ou régler d'au moins deux façons, sur la base des données de pesage obtenues par l'unité d'analyse (300), au moins un groupe et/ou un dispositif, notamment d'au moins deux façons au moins un groupe et/ou un dispositif situés en amont de la balance (200).

16. Dispositif de fabrication selon l'une quelconque des revendications 12 à 15, **caractérisé en ce qu'**au moins une station de formage (506) et/ou au moins un outil de formage (508, 510) est réalisé pour former un groupe de deux pièces usinées (150) ou davantage et comprend un moyen d'évacuation et/ou est réalisé pour conserver et/ou évacuer les pièces usinées (150) individuelles et/ou groupes de Pièces usinées (150) de façon contrôlée.

17. Procédé servant pour le fonctionnement d'un dispositif de fabrication (500) selon la revendication 12, comprenant les étapes suivantes :
- mise à disposition d'une matière de départ (140) ;
- amenée d'une matière de départ (140) dans une unité de formage (504), dans lequel l'unité de formage (504) comporte au moins une station de formage (506) avec au moins un outil de formage (508) et au moins un dispositif de pressage (510) ;
- formage d'au moins une pièce usinée (150), notamment d'un groupe de pièces usinées (150) à l'aide de l'outil de formage (508) ;
**caractérisé en ce que** :
le poids total et la répartition horizontale du poids d'au moins une pièce usinée (150) ou d'une pile de pièces usinées (152) positionnées sur l'élément de support (202), notamment d'un groupe de deux pièces usinées (150) ou de piles de pièce usinées (152) ou plus positionnées sont détectés en aval de la station de formage (506) au cours d'une étape de pesage, au moyen d'une balance (200) d'un système de pesage (100) ;
dans lequel des données de pesage sont calculées au cours de l'étape de pesage et transmises à une unité d'analyse (300), dans lequel l'unité d'analyse (300) transmet les données de pesage à une unité de commande (320) et, sur cette base et sur la base de l'utilisation et/ou de l'intégration des prescriptions de valeurs théoriques, notamment d'algorithmes, de tables de valeurs et/ou d'une intelligence artificielle, au moins :
- commande et/ou règle d'au moins deux façons un groupe et/ou un dispositif ;
- transmet un signal d'indication et/ou un signal d'avertissement à une unité d'envoi, notamment à une interface personne-machine, à un capteur de signaux optiques ou acoustiques.

18. Procédé selon la revendication 17, **caractérisé en ce qu'**après le formage commun d'au moins deux pièces usinées (150), un pesage graduel est réalisé pour un nombre de positions de pièce usinée supérieur ou égal 2, notamment un pesage des pièces usinées (150) en fonction de leur position.

19. Procédé selon la revendication 17, **caractérisé en ce qu'**après le formage commun d'un groupe d'au moins deux pièces usinées (150), un pesage multiple d'un formage suivant d'un groupe de pièces usinées (150) suivant est réalisé en pesant de façon indépendante, lors de pesages partiels, un nombre de pièces de pièces usinées (150) du groupe (154) formé par l'ensemble.

20. Procédé selon l'une quelconque des revendications 17 à 19, **caractérisé en ce que** l'étape de pesage est réalisée après le premier formage et après un formage supplémentaire.

21. Procédé selon la revendication 19 à 20, **caractérisé en ce que** le système de pesage (100) est réalisé selon l'une quelconque des revendications 1 à 11.
